# EUROPEAN PATENT APPLICATION

(11) **EP 4 852 502 A1**
(43) Date of publication of application: **09.12.2026**
(21) Application number: 24921023.8
(22) Date of filing: 02.02.2024
(51) Int. Cl.: H04W 24/10

(54) **MEASUREMENT INFORMATION REPORTING CONTROL METHODS, TERMINAL DEVICES AND FIRST NETWORK DEVICES**

(71) Applicant: GUANGDONG OPPO MOBILE TELECOMMUNICATIONS CORP., LTD., Dongguan, Guangdong 523860 (CN)
(72) Inventor: FAN, Jiangsheng, Dongguan, Guangdong 523860 (CN); WU, Hao, Dongguan, Guangdong 523860 (CN)
(74) Representative: Taor, Simon Edward William
(86) International application number: PCT/CN2024/075574
(87) International publication number: WO 2025/160967

(57) **Abstract**

A method for controlling measurement information reporting, a terminal device, a first network device, a chip, a computer-readable storage medium, a computer program product, a computer program, and a communication system are provided. The method includes the following. A terminal device determines measurement configuration information. The measurement configuration information is used to control the terminal device to report a measurement result to a network device if a first prediction event is satisfied, and the measurement result includes cell-level measurement results associated with at least two moments, where a first part of information in the measurement configuration information is obtained by receiving dedicated signaling sent by the network device and a second part of information in the measurement configuration information is obtained in a default manner; or the measurement configuration information is obtained by receiving dedicated signaling sent by the network device; or the measurement configuration information is obtained in a default manner. As such, it can improve efficiency of cell handover and effectively reduce the probability of radio link failure caused by mobility of the terminal device.

## Description

### TECHNICAL FIELD

This disclosure relates to the field of communication, and more specifically, to a method for controlling measurement information reporting, a terminal device, a first network device, a chip, a computer-readable storage medium, a computer program product, a computer program, and a communication system.

### BACKGROUND

In a mobile communication system, a serving cell for a terminal device may change as the terminal device moves, and such change of serving cell is called cell handover. Generally, to help a network device sense movement of the terminal device promptly, the network device configures a measurement object (MO) for the terminal device in advance. If a measurement reporting event associated with the MO is satisfied, the terminal device sends a measurement result of one or more cells to the network device, to assist the network device in making cell handover-related decisions. How to improve efficiency of cell handover needs to be taken into consideration.

### SUMMARY

Embodiments of the disclosure provide a method for controlling measurement information reporting, a terminal device, a first network device, a chip, a computer-readable storage medium, a computer program product, a computer program, and a communication system, which can improve efficiency of cell handover.

Embodiments of the disclosure provide a method for controlling measurement information reporting. The method is applied to a terminal device. The method includes the following. Measurement configuration information is determined. The measurement configuration information is used to control the terminal device to report a measurement result to a network device when a first prediction event is satisfied, and the measurement result includes cell-level measurement results associated with at least two moments, where a first part of information in the measurement configuration information is obtained by receiving dedicated signaling sent by the network device and a second part of information in the measurement configuration information is obtained in a default manner; or the measurement configuration information is obtained by receiving the dedicated signaling sent by the network device; or the measurement configuration information is obtained in the default manner.

Embodiments of the disclosure provide a method for controlling measurement information reporting. The method is applied to a first network device. The method includes the following. A measurement result reported by a terminal device is received. The measurement result includes cell-level measurement results associated with at least two moments. The measurement result is obtained by the terminal device based on determined measurement configuration information and the terminal device triggers reporting of the measurement result when a first prediction event is satisfied, where a first part of information in the measurement configuration information is obtained by receiving dedicated signaling sent by the first network device and a second part of information in the measurement configuration information is obtained in a default manner; or the measurement configuration information is obtained by receiving the dedicated signaling sent by the first network device; or the measurement configuration information is obtained in the default manner.

Embodiments of the disclosure provide a terminal device. The terminal device includes a first processing unit. The first processing unit is configured to determine measurement configuration information. The measurement configuration information is used to control the terminal device to report a measurement result to a network device when a first prediction event is satisfied, and the measurement result includes cell-level measurement results associated with at least two moments, where a first part of information in the measurement configuration information is obtained by receiving dedicated signaling sent by the network device and a second part of information in the measurement configuration information is obtained in a default manner; or the measurement configuration information is obtained by receiving the dedicated signaling sent by the network device; or the measurement configuration information is obtained in the default manner.

Embodiments of the disclosure provide a first network device. The first network device includes a second communication unit. The second communication unit is configured to receive a measurement result reported by a terminal device. The measurement result includes cell-level measurement results associated with at least two moments, the measurement result is obtained by the terminal device based on determined measurement configuration information and the terminal device triggers reporting of the measurement result when a first prediction event is satisfied, where a first part of information in the measurement configuration information is obtained by receiving dedicated signaling sent by the first network device and a second part of information in the measurement configuration information is obtained in a default manner; or the measurement configuration information is obtained by receiving the dedicated signaling sent by the first network device; or the measurement configuration information is obtained in the default manner.

Embodiments of the disclosure provide a terminal device. The terminal device includes a transceiver, a processor, and a memory. The memory is configured to store computer programs. The transceiver is configured to communicate with other devices. The processor is configured to invoke and execute the computer programs stored in the memory, to cause the terminal device to perform the method for controlling measurement information reporting described above.

Embodiments of the disclosure provide a first network device. The first network device includes a transceiver, a processor, and a memory. The memory is configured to store computer programs. The transceiver is configured to communicate with other devices. The processor is configured to invoke and execute the computer programs stored in the memory, to cause the first network device to perform the method for controlling measurement information reporting described above.

Embodiments of the disclosure provide a chip. The chip is configured to implement the method for controlling measurement information reporting described above. Specifically, the chip includes a processor. The processor is configured to invoke and execute computer programs from a memory, to cause a device equipped with the chip to perform the method for controlling measurement information reporting described above.

Embodiments of the disclosure provide a computer-readable storage medium. The computer-readable storage medium is configured to store computer programs which, when executed by a device, are operable with the device to perform the method for controlling measurement information reporting described above.

Embodiments of the disclosure provide a computer program product. The computer program product includes computer program instructions. The computer program instructions are operable with a computer to perform the method for controlling measurement information reporting described above.

Embodiments of the disclosure provide a computer program. The computer program, when executed by a computer, is operable with the computer to perform the method for controlling measurement information reporting described above.

Embodiments of the disclosure provide a communication system. The communication system includes a terminal device and a first network device configured to implement the method for controlling measurement information reporting described above.

In embodiments of the disclosure, the terminal device determines the measurement configuration information based on the dedicated signaling sent by the network device and/or the default manner. Based on the measurement configuration information, the terminal device reports the measurement result if the first prediction event is satisfied, where the measurement result includes the cell-level measurement results associated with at least two moments. In this way, the network device can obtain sufficient cell-level measurement results in advance, and accordingly make handover decisions without waiting for actual occurrence of a measurement reporting event. As such, it is possible to improve efficiency of cell handover and effectively reduce the probability of radio link failure caused by mobility of the terminal device, and in addition, the terminal device can save some time-domain measurement overhead.

### BRIEF DESCRIPTION OF THE DRAWINGS

FIG. 1 is a schematic diagram of a communication system according to embodiments of the disclosure.
FIG. 2 is a schematic flowchart of a method for controlling measurement information reporting according to an embodiment of the disclosure.
FIG. 3 is a schematic flowchart of a method for controlling measurement information reporting according to another embodiment of the disclosure.
FIG. 4 is a schematic flowchart of a method for controlling measurement information reporting according to another embodiment of the disclosure.
FIG. 5 is a schematic flowchart of a method for controlling measurement information reporting according to another embodiment of the disclosure.
FIG. 6 is a schematic flowchart of a method for controlling measurement information reporting according to another embodiment of the disclosure.
FIG. 7 is a schematic block diagram of a terminal device according to an embodiment of the disclosure.
FIG. 8 is a schematic block diagram of a terminal device according to another embodiment of the disclosure.
FIG. 9 is a schematic block diagram of a first network device according to an embodiment of the disclosure.
FIG. 10 is a schematic block diagram of a communication device according to embodiments of the disclosure.
FIG. 11 is a schematic block diagram of a chip according to embodiments of the disclosure.
FIG. 12 is a schematic block diagram of a communication system according to embodiments of the disclosure.

### DETAILED DESCRIPTION

The following will describe technical solutions of embodiments of the disclosure with reference to the accompanying drawings in embodiments of the disclosure.

The technical solutions of embodiments of the disclosure are applicable to various communication systems, for example, a new radio (NR) system, an evolved system of an NR system, an NR-based access to unlicensed spectrum (NR-U) system, a non-terrestrial network (NTN) system, a universal mobile telecommunication system (UMTS), a wireless local area network (WLAN), a wireless fidelity (WiFi), a 5^{th}-generation (5G) communication system, a 6^{th}-generation (6G) communication system, or other communication systems, etc.

Generally speaking, a conventional communication system generally supports a limited quantity of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, or vehicle to everything (V2X) communication, etc. Embodiments of the disclosure can also be applied to these communication systems.

In an implementation, the communication system in embodiments of the disclosure may be applied to a carrier aggregation (CA) scenario, or may be applied to a dual connectivity (DC) scenario, or may be applied to a standalone (SA) network deployment scenario.

In an implementation, the communication system in embodiments of the disclosure is applicable to an unlicensed spectrum, and an unlicensed spectrum may be regarded as a shared spectrum. Or the communication system in embodiments of the disclosure is applicable to a licensed spectrum, and a licensed spectrum may be regarded as a non-shared spectrum.

Various embodiments of the disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device, etc.

The terminal device may be a station (ST) in a WLAN, a cellular radio telephone, a cordless telephone, a session initiation protocol (SIP) telephone, a wireless local loop (WLL) station, a personal digital assistant (PDA), a handheld device or a computing device with wireless communication functions, other processing devices coupled with a wireless modem, an in-vehicle device, a wearable device, and a terminal device in a next-generation communication system, for example, a terminal device in an NR network, or a terminal device in a future evolved public land mobile network (PLMN), etc.

In embodiments of the disclosure, the terminal device may be deployed on land, which includes indoor or outdoor, handheld, wearable, or in-vehicle. The terminal device may also be deployed on water (such as ships, etc.). The terminal device may also be deployed in the air (such as airplanes, balloons, satellites, etc.).

In embodiments of the disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, or a wireless terminal device in smart home, etc.

By way of explanation rather than limitation, in embodiments of the disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the disclosure, the network device may be a device configured to communicate with a mobile device, and the network device may be an access point (AP) in a WLAN, or a relay station or AP, or an in-vehicle device, a wearable device, a network device (gNB) in an NR network, a network device in a future evolved PLMN, or a network device in an NTN, etc.

By way of explanation rather than limitation, in embodiments of the disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In embodiments of the disclosure, the network device serves a cell, and the terminal device communicates with the network device on a transmission resource (for example, a frequency-domain resource or a spectrum resource) for the cell. The cell may be a cell corresponding to the network device (for example, a base station). The cell may belong to a macro base station, or may belong to a base station corresponding to a small cell. The small cell may include: a metro cell, a micro cell, a pico cell, a femto cell, and the like. These small cells are characterized by small coverage and low transmission power and are adapted to provide data transmission service with high-rate.

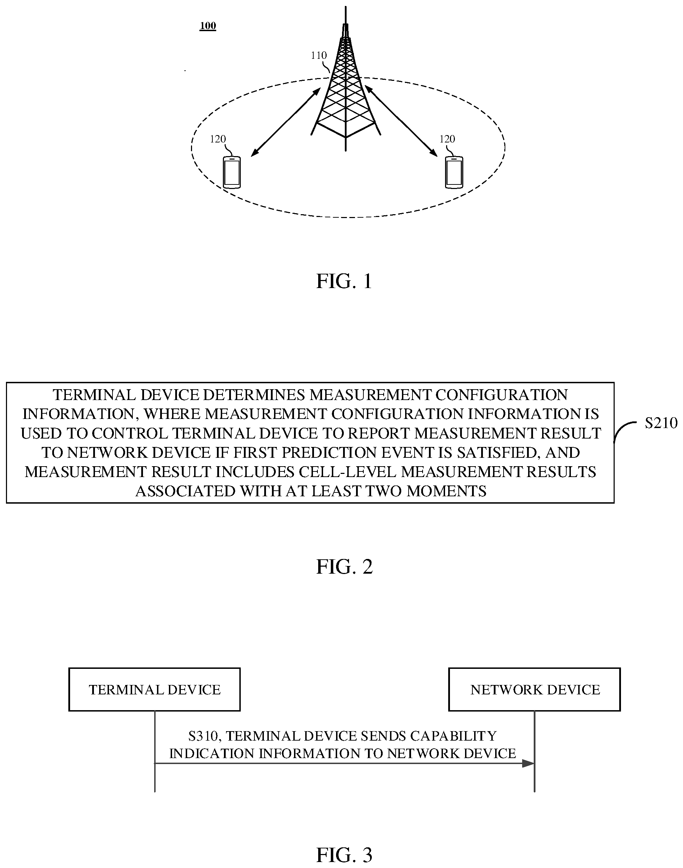

FIG. 1 exemplarily illustrates a communication system 100. The communication system includes one network device 110 and two terminal devices 120. In an implementation, the communication system 100 may include multiple network devices 110, and there may be other quantities of terminal devices 120 in a coverage area of each network device 110, which is not limited in embodiments of the disclosure.

It should be understood that, in embodiments of the disclosure, a device with communication functions in a network/system can be referred to as a "communication device". Taking the communication system illustrated in FIG. 1 as an example, the communication device may include a network device and a terminal device that have communication functions. The network device and the terminal device can be the devices in embodiments of the disclosure and will not be elaborated again herein. The communication device may further include other devices such as a network controller, a mobility management entity, or other network entities in the communication system, and embodiments of the disclosure are not limited in this regard.

It should be understood that, the terms "system" and "network" herein are usually used interchangeably throughout this disclosure. The term "and/or" herein only describes an association between associated objects, which means that there can be three relationships. For example, *A* and/or *B* can mean *A* alone, both *A* and *B* exist, and *B* alone. In addition, the character "/" herein generally indicates that the associated objects are in an "or" relationship.

It should be understood that, "indication" referred to in embodiments of the disclosure may be a direct indication, may be an indirect indication, or may mean that there is an association relationship. For example, *A* indicates *B* may mean that *A* directly indicates *B*, for instance, *B* can be obtained according to *A*; may mean that *A* indirectly indicates *B*, for instance, *A* indicates *C*, and *B* can be obtained according to *C*; or may mean that that there is an association between *A* and *B*.

In the elaboration of embodiments of the disclosure, the term "correspondence" may mean that there is a direct or indirect correspondence between the two, may mean that there is an association between the two, or may mean a relationship of indicating and indicated or configuring and configured, etc.

In order for better understanding of technical solutions of embodiments of the disclosure, the related art in embodiments of the disclosure will be described in detail below. The following related art as an optional scheme can be arbitrarily combined with the technical solutions of embodiments of the disclosure, which shall all belong to the protection scope of embodiments of the disclosure.

In a mobile communication system, a serving cell for a terminal device may change as the terminal device moves, and such change of serving cell is called cell handover. Generally, to help a network device sense movement of the terminal device promptly, the network device configures a measurement object (MO) for the terminal device in advance. If a measurement reporting event associated with the MO is satisfied, the terminal device sends a measurement result of one or more cells to the network device. Based on the measurement result reported by the terminal device in combination with additional information obtained locally (such as the load status of various neighbour cells, etc.), the network device selects one or more neighbour cells to initiate a handover request. After receiving an acceptance feedback, a current serving cell for the terminal device forwards a handover command (contained in the acceptance feedback information) generated for a target cell for handover to the terminal device. After successfully receiving the handover command generated for the target cell, the terminal device initiates a connection establishment procedure with the target cell. The entire handover procedure is completed after connection establishment succeeds.

Currently, when a measurement event is triggered, a cell-related measurement result to be reported by the terminal device is obtained by the terminal device through an actual measurement procedure. Although such a cell measurement reporting method can be workable, it may not have high timeliness and may not be energy-saving and efficient, because the terminal device needs to continuously perform measurement tasks before the measurement reporting event is triggered.

Artificial intelligence (AI) technology, as a cutting-edge technology, is being explored and utilized across various industries, and communication systems are no exception. In recent years, integration of AI into communication systems has consistently been a popular direction in the field of communication. With tight integration of AI technology and communication systems, use of AI models to optimize timing of measurement reporting can be taken into consideration, but there is currently no solution.

FIG. 2 is a schematic flowchart of a method for controlling measurement information reporting according to an embodiment of the disclosure. The method is applied to a terminal device, and optionally, may be applied to the terminal device in the system illustrated in FIG. 1, but is not limited thereto. The method includes the following.

S210, a terminal device determines measurement configuration information, where the measurement configuration information is used to control the terminal device to report a measurement result to a network device if a first prediction event is satisfied, and the measurement result includes cell-level measurement results associated with at least two moments.

Here, a first part of information in the measurement configuration information is obtained by receiving dedicated signaling sent by the network device and a second part of information in the measurement configuration information is obtained in a default manner. Alternatively, the measurement configuration information is obtained by receiving dedicated signaling sent by the network device. Alternatively, the measurement configuration information is obtained in a default manner.

As an example but not limitation, the manner for obtaining the measurement configuration information described above may include one of the following cases.

Case 1: The measurement configuration information includes at least two parts of information, where the two parts of information include the first part of information and the second part of information, and the first part of information in the two parts of information is obtained by receiving dedicated signaling sent by the network device and the second part of information in the two parts of information is obtained in a default manner. Optionally, the two parts of information described above may constitute all information in the measurement configuration information, that is, one part of information in the measurement configuration information is obtained by receiving dedicated signaling sent by the network device, and the other part of information in the measurement configuration information is obtained in a default manner. Alternatively, in addition to the first part of information and the second part of information, the measurement configuration information may further include other information, for example, the measurement configuration information further includes a third part of information, and the third part of information may be configured autonomously by the terminal device or obtained via dedicated signaling sent by the network device (e.g., using related configuration parameters in the related art).

Case 2: All information in the measurement configuration information is obtained by receiving dedicated signaling sent by the network device.

Case 3: One part of information in the measurement configuration information is obtained by receiving dedicated signaling sent by the network device, and the other part of information in the measurement configuration information is obtained in other ways, for example, through autonomous configuration by the terminal device.

Case 4: All information in the measurement configuration information is obtained in a default manner.

Case 5: One part of information in the measurement configuration information is obtained in a default manner, and the other part of information in the measurement configuration information is obtained in other ways, for example, through autonomous configuration by the terminal device.

In embodiments of the disclosure, the measurement configuration information described above is used to control the terminal device to report a measurement result to the network device when the first prediction event is satisfied, where the measurement result includes cell-level measurement results associated with at least two moments. Optionally, the measurement configuration information may be used to control a condition on which the first prediction event is satisfied, for example, the measurement configuration information may include a related parameter(s) for the first prediction event. The measurement configuration information may also be used to control reporting content of the terminal device, for example, the measurement configuration information may include related parameters for moments associated with the foregoing cell-level measurement results.

In embodiments of the disclosure, the first prediction event is an event determined based on prediction. Optionally, the first prediction event may be associated with a first event. For example, the first prediction event may include the following: occurrence of the first event is predicted, that is, the first event being satisfied after a certain duration is predicted. Here, the first event may be a measurement reporting event, for example, an actual event in the related art used to trigger the terminal device to report a cell measurement result. Optionally, the terminal device may use an AI/ML (machine learning) model in order for event prediction.

Based on the above illustration, the terminal device determines the measurement configuration information based on the dedicated signaling sent by the network device and/or the default manner. Based on the measurement configuration information, the terminal device reports the measurement result if the first prediction event is satisfied, where the measurement result includes the cell-level measurement results associated with at least two moments. In this way, efficiency of cell handover can be improved, the probability of radio link failure caused by mobility of the terminal device can be effectively reduced, and the terminal device can also save part of time-domain measurement overhead. Specifically, first, it helps the network device to make handover decisions in advance, because the terminal device does not need to wait for sending the cell measurement result until the measurement reporting event actually occurs. Instead, the terminal device reports the cell measurement result if the terminal device predicts that the measurement reporting event will occur after a certain duration elapsed starting from the current moment, that is, the first prediction event is satisfied. In other words, the network device obtains the measurement result in advance, which not only allows the network device to determine for the terminal device in advance whether a handover condition is met, but also can effectively reduce the probability of radio link failure caused by mobility of the terminal device if a handover command can be issued in advance. Second, if the network device issues the handover command to the terminal device before an actual occurrence moment of the measurement reporting event in the related art, the terminal device can also save measurement overhead from receiving the handover command to an estimated occurrence moment of the measurement reporting event.

Optionally, the cell-level measurement result in embodiments of the disclosure may include one or more of: a reference signal received power (RSRP), a reference signal received quality (RSRQ), or a signal to interference plus noise ratio (SINR).

In some embodiments, the cell-level measurement results associated with at least two moments include a cell-level measurement result associated with a trigger moment of the first prediction event and a cell-level measurement result associated with an estimated occurrence moment of the first event associated with the first prediction event.

According to the above embodiments, the cell-level measurement results associated with at least two moments include the cell-level measurement result associated with the trigger moment of the first prediction event and the cell-level measurement result associated with the estimated occurrence moment of the first event. This allows the network device to obtain the most recent actual measurement result, as well as prediction information that triggers reporting of cell-level measurement results, thereby assisting the network device in evaluating whether cell handover is needed.

It should be noted that, as described above, the first prediction event may be that occurrence of the associated first event after a period of time is predicted, that is, the associated first event being satisfied after a period of time is predicted. For example, if the first event is that a signal measurement result of a neighbour cell is better than a signal measurement result of a primary cell (PCell)/a signal measurement result of a primary secondary cell (PSCell), and a difference between the signal measurement result of the neighbour cell and that of the PCell/the PSCell is greater than or equal to an offset, that is, the signal measurement result of the neighbour cell is better than that of the PCell/the PSCell by an offset, then the first prediction event may be that the signal measurement result of the neighbour cell being better than that of the PCell/the PSCell by an offset after a first duration elapsed starting from the current moment is predicted. The estimated occurrence moment of the first event is a moment obtained by offsetting the current moment forward to a future moment by the first duration. Therefore, the first event has not actually occurred. Optionally, the cell-level measurement result associated with the first event may be a cell-level measurement result obtained by the terminal device through prediction (e.g., AI/ML model-based prediction).

In some embodiments, the cell-level measurement results associated with at least two moments described above include a cell-level measurement result of each cell in a first cell set. The first cell set includes one or more of the following: one or more cells indicated by the network device via the dedicated signaling; all (current) serving cells for the terminal device; all cells in a triggered-cell list (*cellsTriggeredList* parameter) recorded in a temporary variable stored in the terminal device when the first prediction event is satisfied; a cell which triggers the first prediction event; an intra-frequency neighbour cell of the cell which triggers the first prediction event; or an intra-frequency neighbour cell with the best measurement result associated with each serving cell in all (current) serving cells for the terminal device.

According to the above embodiments, a cell range for the cell-level measurement results associated with at least two moments reported by the terminal device is limited. This can reduce overhead for the terminal device to report the cell-level measurement results associated with at least two moments. Some examples in which the cell range includes one type or multiple types of cells are provided below.

For example, the first cell set may include one or more cells indicated by the network device via the dedicated signaling. When the first prediction event is satisfied, the terminal device reports the cell-level measurement results associated with at least two moments for each cell indicated via the dedicated signaling. The network device can control, via the dedicated signaling, a cell range for which the terminal device reports the cell-level measurement results associated with at least two moments. This facilitates the network device in obtaining cell-level measurement results for the cells that are involved in making handover decisions.

For example, the first cell set may include all serving cells for the terminal device. When the first prediction event is satisfied, the terminal device reports the cell-level measurement results associated with at least two moments for each serving cell for the terminal device. Optionally, the first cell set may also include an intra-frequency neighbour cell with the best measurement result associated with each serving cell for the terminal device. When the first prediction event is satisfied, the terminal device reports cell-level measurement results for each serving cell for the terminal device and for the intra-frequency neighbour cell with the best measurement result associated with each serving cell, such that the network device can determine a suitable target cell for handover.

For example, the first cell set may include all cells in the *cellsTriggeredList* parameter recorded in the temporary variable stored in the terminal device when the first prediction event is satisfied. When the first prediction event is satisfied, the terminal device reports the cell-level measurement results associated with at least two moments for each cell in the *cellsTriggeredList* parameter. For each measurement identity (each measurement identity links one MO with one measurement reporting configuration, where the measurement reporting configuration includes a parameter related to the first prediction event), if a first prediction event associated with the measurement identity is triggered, a cell which triggers the first prediction event and an intra-frequency neighbour cell of the cell are added into the *cellsTriggeredList* parameter recorded in the temporary variable stored in the terminal device. For example, the first cell set may include the cell which triggers the first prediction event. When the first prediction event is satisfied, the terminal device reports the cell-level measurement results associated with at least two moments for the cell which triggers the first prediction event. In a majority of application scenarios (e.g., non-unmanned aerial vehicle scenarios), the number of cells which trigger the first prediction event is equal to 1. In a minority of application scenarios (e.g., unmanned aerial vehicle scenarios), the number of cells which trigger the measurement reporting prediction event may be greater than or equal to 1.

For example, the first cell set may include all serving cells for the terminal device, the intra-frequency neighbour cell with the best measurement result associated with each serving cell for the terminal device, the cell which triggers the first prediction event, and the intra-frequency neighbour cell of the cell which triggers the first prediction event. Assuming that a cell frequency point associated with the cell which triggers the first prediction event is f1, then the number of cells operating on f1 reported in the measurement result cannot exceed an agreed quantity threshold, to reduce overhead of reporting the cell-level measurement results associated with at least two moments. For example, the agreed quantity threshold is equal to 4, 8, or 16. Here, if an MO for a serving cell triggers the first prediction event, the first cell set may only include all serving cells for the terminal device and the intra-frequency neighbour cell with the best measurement result associated with each serving cell for the terminal device.

For example, the first cell set may include all serving cells for the terminal device, the cell which triggers the first prediction event, and the intra-frequency neighbour cell of the cell which triggers the first prediction event.

It should be noted that, in practical applications, the cell range for which the terminal reports the cell-level measurement results associated with at least two moments may also be in other forms except the examples above. The specific form can be determined according to scenario requirements, system agreements, or protocol agreements, which will not be exhaustively listed herein.

Optionally, the terminal device may report cell-level measurement results associated with different types of moments. For example, the terminal device may report cell-level measurement results associated with at least two types of moments among the trigger moment of the first prediction event, a history moment, and a future moment. The cell ranges involved in cell-level measurement results associated with different types of moments may be different or may be the same. For instance, for the trigger moment of the first prediction event, the cell range for the cell-level measurement results reported by the terminal device may include all serving cells for the terminal device, the intra-frequency neighbour cell with the best measurement result associated with each serving cell for the terminal device, the cell which triggers the first prediction event, and the intra-frequency neighbour cell of the cell which triggers the first prediction event, and the terminal device reports cell measurement results for all of these cells. For a history moment and/or a future moment, the cell range for the cell-level measurement results reported by the terminal device may only include all serving cells for the terminal device; or may include all serving cells for the terminal device, the intra-frequency neighbour cell with the best measurement result associated with each serving cell for the terminal device, the cell which triggers the first prediction event, and the intra-frequency neighbour cell of the cell which triggers the first prediction event, and the terminal device reports cell measurement results for all of these cells.

It should be noted that, the trigger moment of the first prediction event described above can be understood as a current moment at which the terminal device performs measurement result reporting or a moment at which the terminal device determines that the first prediction event is satisfied. The trigger moment of the first prediction event can also serve as a reference moment for a history moment and a future moment. Specifically, a history moment is a moment which is before the trigger moment of the first prediction event, and a future moment is a moment which is after the trigger moment of the first prediction event. In addition, a cell-level measurement result associated with a history moment and the cell-level measurement result associated with the trigger moment of the first prediction event each may be a cell-level measurement result obtained by the terminal device through actual measurement. A cell-level measurement result associated with a future moment may be a cell-level measurement result obtained by the terminal device through prediction (e.g., AI/ML-based prediction).

In some embodiments, the measurement configuration information includes one or more of the following information (1)~(6).
(1) A second cell set, where the second cell set indicates a cell range for which the terminal device is allowed to report the cell-level measurement results associated with at least two moments.
   Optionally, the second cell set may be the first cell set in the foregoing embodiments, and the second cell set includes one or more of: one or more cells indicated by the network device via the dedicated signaling, all serving cells for the terminal device, all cells in a triggered-cell list (*cellsTriggeredList* parameter) recorded in a temporary variable stored in the terminal device when the first prediction event is satisfied, a cell which triggers the first prediction event, an intra-frequency neighbour cell of the cell which triggers the first prediction event, and an intra-frequency neighbour cell with the best measurement result associated with each serving cell in all serving cells for the terminal device.
(2) First indication information, where the first indication information indicates whether the terminal device needs to report the cell-level measurement results associated with at least two moments when the first prediction event is satisfied.
(3) First quantity information, where the first quantity information indicates to the terminal device to report a cell-level measurement result(s) associated with at most *n* history moments when the first prediction event is satisfied, where *n* is a positive integer and *n* is determined based on the first quantity information.

That is, the measurement configuration information can indicate to the terminal device to report a cell-level measurement result associated with a history moment. First, by reporting to the network device cell-level measurement results corresponding to several history moments associated with some cells, the terminal device can assist the network device in performing secondary verification on whether the first prediction event is triggered within a prediction error range for the measurement result, which avoids the network device from relying excessively on a prediction result (e.g., a model inference result such as the first prediction event) of the terminal device. Second, after obtaining the cell-level measurement results corresponding to several history moments associated with some cells reported by the terminal device, the network device can use the information to infer an appropriate cell handover occasion, that is, to select a suitable target cell for handover in an appropriate occasion, thereby improving communication system performance in mobility cases, for example, increasing cell handover success rate, reducing service interruption delay caused by cell handover, and improving system throughput during cell handover. Furthermore, after obtaining the cell-level measurement results corresponding to several history moments associated with some cells reported by the terminal device, the network device can use the information to infer cell-level measurement results corresponding to several future moments associated with these cells. If the information is sent to the target cell for handover in advance, for the target cell for handover, whether to accept a handover request sent from a source cell and which session resources to retain for the case of accepting the handover request can also be determined based on cell-level measurement results predicted for the source cell.

Optionally, *n* is equal to the value of the first quantity information. Alternatively, *n* is the sum of the first quantity information and a preset first value. For example, the preset first value is *x*, which indicates that the terminal device needs to report cell-level measurement results associated with at least *x* history moments to ensure sufficient data of history moments. When the value of the first quantity information is *k*, it indicates that the terminal device needs to report cell-level measurement results associated with at least *x* history moments, and can report cell-level measurement results associated with at most *n* = *x* + *k* history moments, to ensure accuracy of data of history moments.

(4) Second quantity information, where the second quantity information indicates that the terminal device can report a cell-level measurement result(s) associated with at most *m* future moments when the first prediction event is satisfied, where *m* is a positive integer and *m* is determined based on the second quantity information.

That is, the measurement configuration information can indicate to the terminal device to report a cell-level measurement result associated with a future moment. The terminal device notifies to the network device cell-level measurement results corresponding to several future moments related to a cell obtained through prediction/inference, and as such, the network device can perform secondary verification on the degree of accuracy of prediction/inference of the terminal device, thereby considering whether to disable a model inference function of the terminal device.

Optionally, *m* is equal to the value of the second quantity information. Alternatively, *m* is the sum of the second quantity information and a preset second value. For example, the preset second value is *y*, which indicates that the terminal device needs to report cell-level measurement results associated with at least *y* future moments to ensure sufficient data of future moments. When the value of the second quantity information is *z*, it indicates that the terminal device needs to report cell-level measurement results associated with at least *y* future moments, and can report cell-level measurement results associated with at most *m* = *y* + *z* future moments, to achieve verification on the degree of accuracy of data of future moments.

(5) Length configuration information associated with a first time window, where the length configuration information associated with the first time window indicates a window length of the first time window. The first time window is used to determine a range of the at most *n* history moments.

Optionally, an end moment of the first time window is the trigger moment of the first prediction event, and a start moment of the first time window is determined based on the end moment of the first time window and the length configuration information associated with the first time window. Exemplarily, the start moment of the first time window is a moment obtained by offsetting the trigger moment of the first prediction event backward to a history moment in time domain (i.e., offsetting the trigger moment to a moment which is before the trigger moment) by the window length of the first time window.

Optionally, the length configuration information associated with the first time window is configured at one or more of the following granularities: a terminal-device granularity, a frequency point granularity, a band granularity, a band combination granularity, or a frequency range (FR) granularity.

Here, configuration at the terminal-device granularity means that the terminal device may use, without distinguishing between different scenarios, the length configuration information associated with the first time window configured by the network device via dedicated signaling or in a default manner. Such implementation has relatively low complexity. Configuration at the frequency point granularity means that different length configuration information associated with the first time window is configured for different frequency points. Configuration at the band granularity means that different length configuration information associated with the first time window is configured for different bands. Configuration at the band combination granularity means that different length configuration information associated with the first time window is configured for different band combinations. Configuration at the FR granularity means that different length configuration information associated with the first time window is configured for different FRs. By configuring the length configuration information associated with the first time window at the frequency point granularity, the band granularity, the band combination granularity, or the FR granularity, it is possible to associate different scenarios with first time windows having different lengths, thereby providing better configuration flexibility.

Optionally, if the measurement configuration information includes the length configuration information associated with the first time window, any one moment corresponding to the at most *n* history moments in the foregoing embodiments belongs to moments in the first time window.

By indicating the length configuration information associated with the first time window via the measurement configuration information, limitation can be imposed on the window length of the first time window, thereby restricting the range of data of history moments reported by the terminal device. By reporting to the network device cell-level measurement results corresponding to several history moments associated with some cells, the terminal device can assist the network device in performing secondary verification on whether the first prediction event is triggered within a prediction error range for the measurement result. With the limitation of the foregoing first time window, accuracy of predicting the first prediction event by the terminal device can be guaranteed to a certain extent. The network device can also infer more precisely the degree of accuracy of triggering a measurement reporting prediction event by the terminal device, thereby avoiding the network device from relying excessively on a prediction result of the terminal device (e.g., a model inference result). Generally, use of recent history data leads to high accuracy of predicted measurement results corresponding to future moments.

(6) Prediction duration configuration information, where the prediction duration configuration information indicates a window length of a second time window. The second time window is associated with the first prediction event, and the window length of the second time window is a duration between an estimated occurrence moment of a first event associated with the first prediction event and a trigger moment of the first prediction event.

If the measurement configuration information includes the prediction duration configuration information, the window length of the second time window is indicated via the prediction duration configuration information, thereby controlling a duration that the terminal device predicts to be spent before the first event is satisfied. According to embodiments of the disclosure, the terminal device does not need to wait for reporting the measurement result until the first event actually occurs. By configuring the prediction duration configuration information appropriately, the terminal device can restrict a prediction range while reporting the measurement result in advance, thereby ensuring prediction accuracy.

Optionally, a start moment of the second time window is the trigger moment of the first prediction event, and an end moment of the second time window is determined based on the start moment of the second time window and the prediction duration configuration information. Exemplarily, the end moment of the second time window is a moment obtained by offsetting the trigger moment of the first prediction event (i.e., the start moment of the second time window) forward to a future moment in time domain (i.e., offsetting the trigger moment to a moment which is after the trigger moment) by the window length indicated via the prediction duration configuration information.

Optionally, the prediction duration configuration information is configured at one or more of the following granularities: a terminal-device granularity, a frequency point granularity, a band granularity, a band combination granularity, or an FR granularity.

By matching different configuration granularities of the prediction duration configuration information with different scenarios, the solution can be more flexible and better adapted to different implementation requirements.

Optionally, any one moment corresponding to the at most *m* future moments in the foregoing embodiments belongs to moments in the second time window. In this way, a precision error range of cell-level measurement results obtained through model-based inference by the terminal device can be reduced, thereby avoiding the terminal device from blindly inferring cell-level measurement results corresponding to moments in a far future. Generally, a long time interval between an inferred future moment and the current moment leads to a large precision error range of the cell-level measurement results.

It should be noted that, the measurement configuration information may include one or more of the foregoing information (1) to (6). If the measurement configuration information includes one type of information, the one type of information can be configured via dedicated signaling sent by the network device or in a default manner. If the measurement configuration information includes multiple types of information, the multiple types of information may be configured via dedicated signaling sent by the network device; or may be configured in a default manner; or some of the multiple types of information may be configured via dedicated signaling sent by the network device and the rest of the multiple types of information may be configured in a default manner. For example, the second cell set and the prediction duration are configured in a default manner, while the first quantity information and the second quantity information are configured via dedicated signaling sent by the network device. In practical applications, the manner for obtaining various information can be set according to scenario requirements, protocol agreements, or system agreements, which will not be exhaustively listed herein.

Exemplarily, the measurement configuration information includes the first quantity information or includes the first quantity information and the length configuration information associated with the first time window. Optionally, the measurement configuration information further includes the second cell set and/or the first indication information.

Exemplarily, the measurement configuration information includes the second quantity information or includes the second quantity information and the prediction duration configuration information. Optionally, the measurement configuration information further includes the second cell set and/or the first indication information.

Exemplarily, the measurement configuration information includes the first quantity information and the prediction duration configuration information; or includes the first quantity information, the length configuration information associated with the first time window, and the prediction duration configuration information. Optionally, the measurement configuration information further includes the second cell set and/or the first indication information.

Exemplarily, the measurement configuration information includes the first quantity information and the second quantity information; or includes the first quantity information, the second quantity information, and the length configuration information associated with the first time window. Optionally, the measurement configuration information further includes the second cell set and/or the first indication information.

Exemplarily, the measurement configuration information includes the first quantity information, the second quantity information, and the prediction duration configuration information; or includes the first quantity information, the second quantity information, the length configuration information associated with the first time window, and the prediction duration configuration information. Optionally, the measurement configuration information further includes the second cell set and/or the first indication information.

With regard to different types of information included in the measurement configuration information, the behavior of the terminal device in terms of reporting cell-level measurement results thus varies, and accordingly, the network device receives the cell-level measurement results reported by the terminal device. Specifically, if the measurement configuration information includes the first quantity information and/or the second quantity information, the cell-level measurement results reported by the terminal device are different.

In some embodiments, if the measurement configuration information includes the first quantity information, the cell-level measurement results associated with at least two moments include a cell-level measurement result associated with the trigger moment of the first prediction event and a cell-level measurement result associated with at most *n* history moments, where the at most *n* history moments each are a moment which is before the trigger moment of the first prediction event.

In some embodiments, if the measurement configuration information includes the first quantity information, the cell-level measurement results associated with at least two moments include a cell-level measurement result associated with the trigger moment of the first prediction event, a cell-level measurement result associated with the estimated occurrence moment of the first event associated with the first prediction event, and a cell-level measurement result associated with at most *n* history moments, where the at most *n* history moments each are a moment which is before the trigger moment of the first prediction event.

That is, if the measurement configuration information includes the first quantity information, the terminal device sends, to the network device, a cell-level measurement result associated with the trigger moment of the first prediction event and a cell-level measurement result associated with at most *n* history moments indicated via the first quantity information. Optionally, the terminal device may further send, to the network device, a cell-level measurement result associated with the estimated occurrence moment of the first event associated with the first prediction event.

In some embodiments, if the measurement configuration information includes the second quantity information, the cell-level measurement results associated with at least two moments include a cell-level measurement result associated with the trigger moment of the first prediction event and a cell-level measurement result associated with at most *m* future moments, where the at most *m* future moments each are a moment which is after the trigger moment of the first prediction event.

In some embodiments, if the measurement configuration information includes the second quantity information, the cell-level measurement results associated with at least two moments include a cell-level measurement result associated with the trigger moment of the first prediction event, a cell-level measurement result associated with the estimated occurrence moment of the first event associated with the first prediction event, and a cell-level measurement result associated with at most *m* future moments or (*m*-1) future moments, where the at most *m* future moments or (*m*-1) future moments each are a moment which is after the trigger moment of the first prediction event.

Here, the at most *m* future moments indicated via the second quantity information may include or may not include the estimated occurrence moment of the first event. If the at most *m* future moments indicated via the second quantity information include the estimated occurrence moment of the first event, the cell-level measurement results reported by the terminal device may include the cell-level measurement result associated with the trigger moment of the first prediction event, the cell-level measurement result associated with the estimated occurrence moment of the first event associated with the first prediction event, and the cell-level measurement result associated with at most (*m*-1) future moments. If the at most *m* future moments indicated by the second quantity information do not include the estimated occurrence moment of the first event, the cell-level measurement results reported by the terminal device may include the cell-level measurement result associated with the trigger moment of the first prediction event, the cell-level measurement result associated with the estimated occurrence moment of the first event associated with the first prediction event, and the cell-level measurement result associated with at most *m* future moments.

In some embodiments, if the measurement configuration information includes the first quantity information and the second quantity information, the cell-level measurement results associated with at least two moments include a cell-level measurement result associated with the trigger moment of the first prediction event, a cell-level measurement result associated with at most *n* history moments, and a cell-level measurement result associated with at most *m* future moments, where the at most *n* history moments each are a moment which is before the trigger moment of the first prediction event, and the at most *m* future moments each are a moment which is after the trigger moment of the first prediction event.

In some embodiments, if the measurement configuration information includes the first quantity information and the second quantity information, the cell-level measurement results associated with at least two moments include a cell-level measurement result associated with the trigger moment of the first prediction event, a cell-level measurement result associated with the estimated occurrence moment of the first event associated with the first prediction event, a cell-level measurement result associated with at most *n* history moments, and a cell-level measurement result associated with at most *m* future moments or (*m*-1) future moments, where the at most *n* history moments each are a moment which is before the trigger moment of the first prediction event, and the at most *m* future moments or (*m*-1) future moments each are a moment which is after the trigger moment of the first prediction event.

Here, the at most *m* future moments indicated via the second quantity information may include or may not include the estimated occurrence moment of the first event. If the at most *m* future moments indicated by the second quantity information include the estimated occurrence moment of the first event, the cell-level measurement results reported by the terminal device may include the cell-level measurement result associated with the trigger moment of the first prediction event, the cell-level measurement result associated with the estimated occurrence moment of the first event associated with the first prediction event, the cell-level measurement result associated with at most *n* history moments, and the cell-level measurement result associated with at most (*m*-1) future moments. If the at most *m* future moments indicated by the second quantity information do not include the estimated occurrence moment of the first event, the cell-level measurement results reported by the terminal device may include the cell-level measurement result associated with the trigger moment of the first prediction event, the cell-level measurement result associated with the estimated occurrence moment of the first event associated with the first prediction event, the cell-level measurement result associated with at most *n* history moments, and the cell-level measurement result associated with at most *m* future moments.

As described above, the first prediction event may be that occurrence of the first event is predicted. Optionally, the first prediction event may also be that occurrence of the first event is predicted under a specific condition(s). Some optional embodiments are provided below.

In some embodiments, the first prediction event includes one of the following Event 1 to Event 3.

Event 1: A first event being satisfied after a first duration elapsed starting from a current moment is predicted.

The first prediction event includes Event 1, which can save measurement overhead for the terminal device. This is because the terminal device does not need to wait for sending the cell measurement result until the first event actually occurs. Instead, as long as the terminal device predicts that the first event will occur after the first duration elapsed starting from the current moment, that is, the condition is satisfied, the terminal device reports the cell measurement result, and thus can be exempt from cell measurement behavior during the first duration starting from the current moment. Here, the first duration can be determined based on the prediction duration configuration information in the foregoing embodiments, and specifically can be configured via dedicated signaling sent by the network device or in a default manner.

Event 2: A signal measurement result of a current serving cell is less than or equal to a first measurement threshold, and the first even being satisfied after a second duration elapsed starting from the current moment is predicted.

The first prediction event includes Event 2. First, it is possible to save measurement overhead for the terminal device. This is because the terminal device does not need to wait for sending cell measurement result until the first event actual occurs. Instead, as long as the terminal device predicts that the first event will occur after the second duration elapsed starting from the current moment, that is, the condition is satisfied, the terminal device reports the measurement result, and thus can be exempt from cell measurement behavior during the second duration starting from the current moment. Second, the terminal device reports the measurement result only if the signal measurement result of the current serving cell for the terminal device is somewhat bad, which can avoid ineffective measurement reporting behavior of the terminal device, thereby saving measurement reporting overhead for the terminal device. This is because if the signal measurement result of the serving cell is good, the network device is not in a hurry to perform serving-cell handover for the terminal device. In this case, even if the terminal device reports the cell measurement result, the network device is likely to skip performing handover. In such a scenario, with regard to the first prediction event, the signal measurement result of the current serving cell is taken into consideration, which can avoid ineffective measurement reporting of the terminal device. Here, the second duration can be determined based on the prediction duration configuration information in the foregoing embodiments, and specifically can be configured via dedicated signaling sent by the network device or in a default manner.

Event 3: The signal measurement result of the current serving cell has been less than or equal to a second measurement threshold for a third duration, and the first event being satisfied after a fourth duration elapsed starting from the current moment is predicted.

The first prediction event includes Event 3, which can trigger measurement reporting in the case where the signal measurement result of the current serving cell for the terminal devices is relatively stable. As such, it can effectively avoid false trigger of the first prediction event caused by short-term fluctuations of the measurement result of the serving cell, and in addition, can save measurement overhead for the terminal device.

In some embodiments, the first event includes one or more of the following.

Event A1: A signal measurement result of a serving cell is greater than or equal to a third measurement threshold.

Event A2: A signal measurement result of a serving cell is less than or equal to a fourth measurement threshold.

Event A3: A signal measurement result of a neighbour cell is greater than a signal measurement result of a PCell or a signal measurement result of a PSCell, and a difference between the signal measurement result of the neighbour cell and the signal measurement result of the PCell or the signal measurement result of the PSCell is greater than or equal to a first offset.

Event A4: A signal measurement result of a neighbour cell is greater than or equal to a fifth measurement threshold.

Event A5: A signal measurement result of a PCell or a signal measurement result of a PSCell is less than or equal to a sixth measurement threshold, and a signal measurement result of a neighbour cell or a signal measurement result of an SCell is greater than or equal to a seventh measurement threshold.

Event A6: A signal measurement result of a neighbour cell is greater than or equal to a signal measurement result of an SCell, and a difference between the signal measurement result of the neighbour cell and the signal measurement result of the SCell is greater than or equal to a second offset.

Event A7: A distance between the terminal device and a first reference location is greater than or equal to a first distance threshold, and a distance between the terminal device and a second reference location is less than or equal to a second distance threshold.

Event A8: The distance between the terminal device and the first reference location is greater than or equal to a third distance threshold.

Event A9: The distance between the terminal device and the second reference location is less than or equal to a fourth distance threshold.

Event A10: A signal measurement result of an inter-radio access technology (Inter RAT) neighbour cell is greater than or equal to an eighth measurement threshold.

Event A11: A signal measurement result of a PCell is less than or equal to a ninth measurement threshold, and a signal measurement result of an Inter RAT neighbour cell is greater than or equal to a tenth measurement threshold.

Event A12: A periodical measurement reporting timer expires.

Event A13: A time reaches a first absolute time (i.e., a predefined absolute time, which may be denoted as absolute time *X*).

Event A14: A fifth duration has elapsed since the measurement configuration information is successfully received.

It should be noted that, if the first event includes multiple events, the first prediction event may also include multiple events in the foregoing Event 1 to Event 3. For example, if the first event includes Event A3 and Event A5, the first prediction event may include: Event A3 being satisfied after the first duration elapsed starting from the current moment is predicted; and the signal measurement result of the current serving cell is less than or equal to the first measurement threshold, and Event A5 being satisfied after the second duration elapsed starting from the current moment is predicted. For another example, if the first event includes Event A3, Event A5, and Event A8, the first prediction event may include: Event A3 being satisfied after the first duration elapsed starting from a current moment is predicted; the signal measurement result of the current serving cell is less than or equal to the first measurement threshold, and Event A5 being satisfied after the second duration elapsed starting from the current moment is predicted; and the signal measurement result of the current serving cell has been less than or equal to the second measurement threshold for the third duration, and Event A8 being satisfied after the fourth duration elapsed starting from the current moment is predicted. It can be understood that, the foregoing Event A1 to Event A14 can be combined with Event 1 to Event 3 arbitrarily without contradiction, and all such combination schemes fall within the protection scope of the disclosure. Exemplarily, assuming the first event associated with each of Event 1 to Event 3 is Event A3 or Event A5, in one piece of measurement configuration information, measurement reporting configurations associated with different measurement identities associated with the same MO can include configurations related to different first prediction events (any one of Event 1 to Event 3). For instance, both measurement identity 1 and measurement identity 2 are associated with MO1, where measurement identity 1 is associated with measurement reporting configuration 1, and measurement identity 2 is associated with measurement reporting configuration 2. Here, measurement reporting configuration 1 includes configuration related to Event 1 (i.e., measurement reporting configuration 1 is associated with Event 1), and measurement reporting configuration 2 includes configuration related to Event 3 (i.e., measurement reporting configuration 2 is associated with Event 3). Alternatively, measurement reporting configurations associated with different measurement identities associated with different MOs can include configuration(s) related to the same or different first prediction events (any one of Event 1 to Event 3), which will not be elaborated herein.

In some embodiments, as illustrated in FIG. 3, the method for controlling measurement information reporting further includes the following.

S310, the terminal device sends capability indication information to the network device, where the capability indication information includes one or more of first capability information or second capability information. The first capability information indicates to the network device whether the terminal device supports performing a measurement reporting task based on the first prediction event. The second capability information indicates to the network device whether the terminal device supports reporting the cell-level measurement results associated with at least two moments via the same measurement reporting message.

The terminal device sends the foregoing capability indication information to the network device, which can assist the network device in determining all or part of the measurement configuration information in order for configuration via dedicated signaling.

Optionally, if the terminal device supports performing a measurement reporting task based on the first prediction event and supports reporting the cell-level measurement results associated with at least two moments via the same measurement reporting message, the terminal device determines the measurement configuration information, and subsequently sends the measurement result if the first prediction event is satisfied.

In some embodiments, the first capability information or the second capability information is indicated at one or more of the following granularities: a terminal-device granularity, a frequency point granularity, a band granularity, a band combination granularity, or an FR granularity.

Here, configuration at the terminal-device granularity means that the terminal device may report, without distinguishing between different scenarios, to the network device whether the terminal device supports performing a measurement reporting task based on the first prediction event and whether the terminal device supports reporting the cell-level measurement results associated with at least two moments via the same measurement reporting message. Configuration at the frequency point granularity/the band granularity/the band combination granularity/the FR granularity means that the terminal device reports, separately for different frequency points/bands/band combinations/FRs, whether the terminal device supports performing a measurement reporting task based on the first prediction event and whether the terminal device supports reporting the cell-level measurement results associated with at least two moments via the same measurement reporting message.

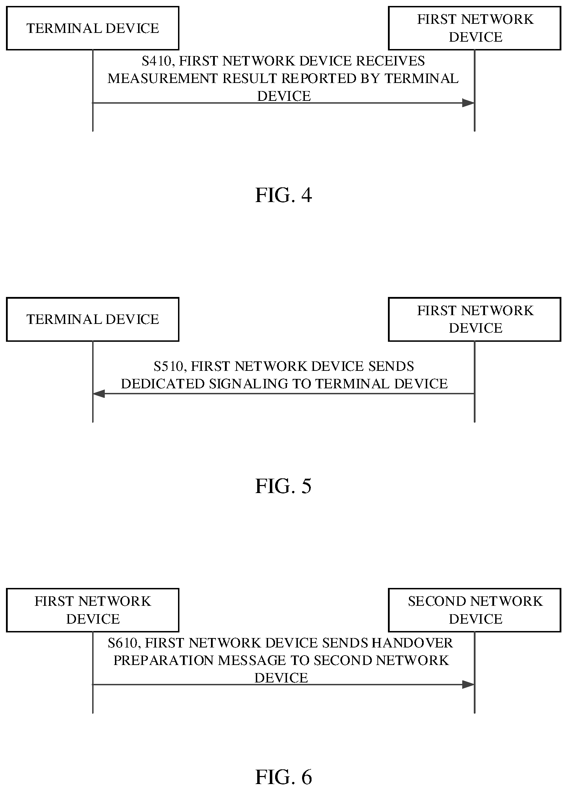

FIG. 4 is a schematic flowchart of a method for controlling measurement information reporting according to an embodiment of the disclosure. The method is applied to a first network device, and optionally, may be applied to the network device in the system illustrated in FIG. 1, but is not limited thereto. The method includes at least some of the following content.

S410, the first network device receives a measurement result reported by a terminal device, where the measurement result includes cell-level measurement results associated with at least two moments. The measurement result is obtained by the terminal device based on measurement configuration information determined, and the terminal device triggers reporting of the measurement result when a first prediction event is satisfied.

Here, a first part of information in the measurement configuration information is obtained by receiving dedicated signaling sent by the first network device, and a second part of information in the measurement configuration information is obtained in a default manner. Alternatively, the measurement configuration information is obtained by receiving dedicated signaling sent by the first network device. Alternatively, the measurement configuration information is obtained in a default manner.

In some embodiments, the method for controlling measurement information reporting described above may further include the following. The first network device receives capability indication information sent by the terminal device, where the capability indication information includes one or more of first capability information or second capability information. The first capability information indicates to the first network device whether the terminal device supports performing a measurement reporting task based on the first prediction event. The second capability information indicates to the first network device whether the terminal device supports reporting the cell-level measurement results associated with at least two moments via the same measurement reporting message.

For specific examples of the method performed by the network device in this embodiment, reference may be made to the corresponding elaborations related to a network device in the foregoing method performed by the terminal device. The measurement result, the measurement configuration information, the capability indication information, and the like in the method performed by the network device may also be implemented with reference to the foregoing embodiments, which are not repeated herein for the sake of brevity.

In some embodiments, as illustrated in FIG. 5, the method for controlling measurement information reporting may further include the following.

S510, the first network device sends dedicated signaling to the terminal device, where the dedicated signaling is used for the terminal device to determine all or part of the measurement configuration information.

In some embodiments, as illustrated in FIG. 6, the method for controlling measurement information reporting further includes the following.

S610, the first network device sends a handover preparation message to a second network device, where the second network device is a network device which a target cell for handover for the terminal device belongs to. The handover preparation message contains a cell-level measurement result for at least one history moment associated with the target cell, and/or a cell-level measurement result for at least one future moment associated with the target cell.

Here, the cell-level measurement result for at least one history moment is an actual measurement result. The cell-level measurement result for at least one future moment is a predicted result. By carrying the cell-level measurement result for at least one history moment associated with the target cell and/or the cell-level measurement result for at least one future moment associated with the target cell in the handover preparation message, it can assist the second network device in determining whether to accept a handover request and generating handover configuration information in the case of accepting the handover request.

In some embodiments, the cell-level measurement result for at least one history moment associated with the target cell and/or the cell-level measurement result for at least one future moment associated with the target cell in the handover preparation message come from the measurement result reported by the terminal device. Optionally, if the terminal device has not reported a predicted cell-level measurement result for at least one future moment in the measurement result reported, the handover preparation message may still contain the cell-level measurement result for at least one future moment associated with the target cell. In this case, the cell-level measurement result for at least one future moment associated with the target cell in the handover preparation message comes from measurement prediction behavior of the first network device. For example, the first network device obtains, through inference, the cell-level measurement result for at least one future moment associated with the target cell based on a cell-level measurement result associated with a trigger moment of the first prediction event and a cell-level measurement result(s) associated with at most *n* history moments reported by the terminal device. The disclosure is not limited in this regard.

As can be seen, according to embodiments of the disclosure, first, the network device can make handover decisions in advance. This is because the terminal device does not need to wait for sending the cell measurement result until a measurement reporting event in the related art actually occurs. Instead, as long as the terminal device predicts that the measurement reporting event will occur after a certain duration elapsed starting from a current moment, that is, the condition is satisfied, the terminal device reports the cell measurement result, that is, the network device obtains the measurement result in advance, which not only allows the network device to determine for the terminal device in advance whether the handover condition is met, but also effectively reduces the probability of radio link failure caused by mobility of the terminal device if a handover command can be issued in advance. Second, if the network device issues the handover command to the terminal device before an actual occurrence moment of the existing measurement reporting event, the terminal device can also save some time-domain measurement overhead (from receiving the handover command to an estimated occurrence moment of the measurement reporting event).

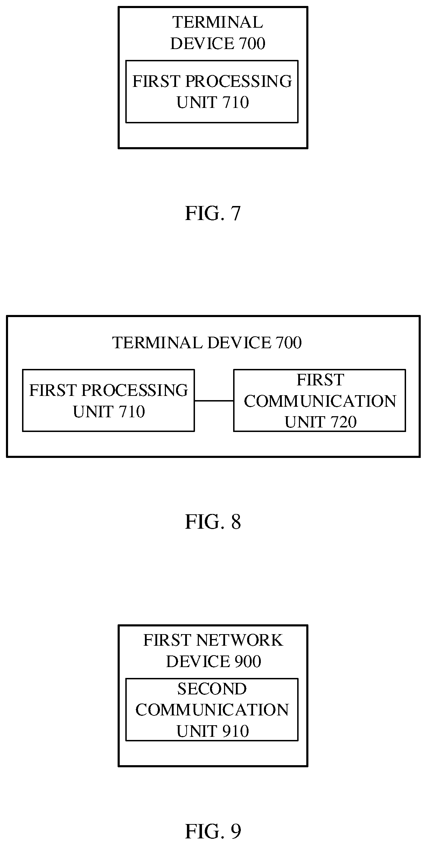

FIG. 7 is a schematic block diagram of a terminal device 700 according to an embodiment of the disclosure. The terminal device 700 may include a first processing unit 710. The first processing unit 710 is configured to determine measurement configuration information. The measurement configuration information is used to control the terminal device to report a measurement result to a network device if a first prediction event is satisfied, and the measurement result includes cell-level measurement results associated with at least two moments, where a first part of information in the measurement configuration information is obtained by receiving dedicated signaling sent by the network device and a second part of information in the measurement configuration information is obtained in a default manner; or the measurement configuration information is obtained by receiving the dedicated signaling sent by the network device; or the measurement configuration information is obtained in the default manner.

In some embodiments, the cell-level measurement results associated with at least two moments include a cell-level measurement result of each cell in a first cell set, and the first cell set includes one or more of: one or more cells indicated by the network device via the dedicated signaling; all serving cells for the terminal device; all cells in a triggered-cell list recorded in a temporary variable stored in the terminal device if the first prediction event is satisfied; a cell which triggers the first prediction event; an intra-frequency neighbour cell of the cell which triggers the first prediction event; or an intra-frequency neighbour cell with the best measurement result associated with each serving cell in all the serving cells for the terminal device.

In some embodiments, the measurement configuration information includes one or more of: a second cell set, first indication information, first quantity information, second quantity information, length configuration information associated with a first time window, or prediction duration configuration information. The second cell set indicates a cell range for which the terminal device is allowed to report the cell-level measurement results associated with at least two moments. The first indication information indicates whether the terminal device needs to report the cell-level measurement results associated with at least two moments if the first prediction event is satisfied. The first quantity information indicates to the terminal device to report a cell-level measurement result associated with at most *n* history moments if the first prediction event is satisfied, where *n* is a positive integer and *n* is determined based on the first quantity information. The second quantity information indicates to the terminal device to report a cell-level measurement result associated with at most *m* future moments if the first prediction event is satisfied, where *m* is a positive integer and *m* is determined based on the second quantity information. The length configuration information associated with the first time window indicates a window length of the first time window, and the first time window is used to determine a range of the at most *n* history moments. The prediction duration configuration information indicates a window length of a second time window, the second time window is associated with the first prediction event, and the window length of the second time window is a duration between an estimated occurrence moment of a first event associated with the first prediction event and a trigger moment of the first prediction event.

In some embodiments, an end moment of the first time window is the trigger moment of the first prediction event, and a start moment of the first time window is determined based on the end moment of the first time window and the length configuration information associated with the first time window.

In some embodiments, the length configuration information associated with the first time window is configured at one or more of the following granularities: a terminal-device granularity, a frequency point granularity, a band granularity, a band combination granularity, or an FR granularity.

In some embodiments, a start moment of the second time window is the trigger moment of the first prediction event, and an end moment of the second time window is determined based on the start moment of the second time window and the prediction duration configuration information.

In some embodiments, the prediction duration configuration information is configured at one or more of the following granularities: a terminal-device granularity, a frequency point granularity, a band granularity, a band combination granularity, or an FR granularity.

In some embodiments, if the measurement configuration information includes the first quantity information, the cell-level measurement results associated with at least two moments include a cell-level measurement result associated with the trigger moment of the first prediction event and a cell-level measurement result associated with at most *n* history moments, where the at most *n* history moments each are a moment which is before the trigger moment of the first prediction event.

In some embodiments, if the measurement configuration information includes the first quantity information, the cell-level measurement results associated with at least two moments include a cell-level measurement result associated with the trigger moment of the first prediction event, a cell-level measurement result associated with the estimated occurrence moment of the first event associated with the first prediction event, and a cell-level measurement result associated with at most *n* history moments, where the at most *n* history moments each are a moment which is before the trigger moment of the first prediction event.

In some embodiments, if the measurement configuration information includes the first quantity information and the second quantity information, the cell-level measurement results associated with at least two moments include a cell-level measurement result associated with the trigger moment of the first prediction event, a cell-level measurement result associated with at most *n* history moments, and a cell-level measurement result associated with at most *m* future moments, where the at most *n* history moments each are a moment which is before the trigger moment of the first prediction event, and the at most *m* future moments each are a moment which is after the trigger moment of the first prediction event.

In some embodiments, if the measurement configuration information includes the first quantity information and the second quantity information, the cell-level measurement results associated with at least two moments include a cell-level measurement result associated with the trigger moment of the first prediction event, a cell-level measurement result associated with the estimated occurrence moment of the first event associated with the first prediction event, a cell-level measurement result associated with at most *n* history moments, and a cell-level measurement result associated with at most *m* future moments or (*m*-1) future moments, where the at most *n* history moments each are a moment which is before the trigger moment of the first prediction event, and the at most *m* future moments or (*m*-1) future moments each are a moment which is after the trigger moment of the first prediction event.

In some embodiments, if the measurement configuration information includes the second quantity information, the cell-level measurement results associated with at least two moments include a cell-level measurement result associated with the trigger moment of the first prediction event and a cell-level measurement result associated with at most *m* future moments, where the at most *m* future moments each are a moment which is after the trigger moment of the first prediction event.

In some embodiments, if the measurement configuration information includes the second quantity information, the cell-level measurement results associated with at least two moments include a cell-level measurement result associated with the trigger moment of the first prediction event, a cell-level measurement result associated with the estimated occurrence moment of the first event associated with the first prediction event, and a cell-level measurement result associated with at most *m* future moments or (*m*-1) future moments, where the at most *m* future moments or (*m*-1) future moments each are a moment which is after the trigger moment of the first prediction event.

In some embodiments, if the measurement configuration information includes the length configuration information associated with the first time window, any moment corresponding to the at most *n* history moments belongs to moments in the first time window.

In some embodiments, any moment corresponding to the at most *m* future moments belongs to moments in the second time window.

In some embodiments, the cell-level measurement results associated with at least two moments include a cell-level measurement result associated with a trigger moment of the first prediction event and a cell-level measurement result associated with an estimated occurrence moment of a first event associated with the first prediction event.

In some embodiments, the first prediction event includes one of the following: a first event being satisfied after a first duration elapsed starting from a current moment is predicted; a signal measurement result of a current serving cell is less than or equal to a first measurement threshold, and the first even being satisfied after a second duration elapsed starting from the current moment is predicted; or the signal measurement result of the current serving cell has been less than or equal to a second measurement threshold for a third duration, and the first event being satisfied after a fourth duration elapsed starting from the current moment is predicted. The first event is associated with the first prediction event.

In some embodiments, the first event includes one or more of the following: a signal measurement result of a serving cell is greater than or equal to a third measurement threshold; the signal measurement result of the serving cell is less than or equal to a fourth measurement threshold; a signal measurement result of a neighbour cell is greater than a signal measurement result of a PCell or a signal measurement result of a PSCell, and a difference between the signal measurement result of the neighbour cell and the signal measurement result of the PCell or the signal measurement result of PSCell is greater than or equal to a first offset; the signal measurement result of the neighbour cell is greater than or equal to a fifth measurement threshold; the signal measurement result of the PCell or the signal measurement result of the PSCell is less than or equal to a sixth measurement threshold, and the signal measurement result of the neighbour cell or a signal measurement result of an SCell is greater than or equal to a seventh measurement threshold; the signal measurement result of the neighbour cell is greater than or equal to the signal measurement result of the SCell, and a difference between the signal measurement result of the neighbour cell and the signal measurement result of the SCell is greater than or equal to a second offset; a distance between the terminal device and a first reference location is greater than or equal to a first distance threshold, and a distance between the terminal device and a second reference location is less than or equal to a second distance threshold; the distance between the terminal device and the first reference location is greater than or equal to a third distance threshold; the distance between the terminal device and the second reference location is less than or equal to a fourth distance threshold; a signal measurement result of an Inter RAT neighbour cell is greater than or equal to an eighth measurement threshold; the signal measurement result of the PCell is less than or equal to a ninth measurement threshold, and the signal measurement result of the Inter RAT neighbour cell is greater than or equal to a tenth measurement threshold; a periodical measurement reporting timer expires; a time reaches a first absolute time; or a fifth duration has elapsed since the measurement configuration information is successfully received.

In some embodiments, as illustrated in FIG. 8, the terminal device 700 further includes a first communication unit 720. The first communication unit 720 is configured to send capability indication information to the network device, where the capability indication information includes one or more of: first capability information or second capability information. The first capability information indicates to the network device whether the terminal device supports performing a measurement reporting task based on the first prediction event. The second capability information indicates to the network device whether the terminal device supports reporting the cell-level measurement results associated with at least two moments via the same measurement reporting message.

In some embodiments, the first capability information or the second capability information is indicated at one or more of the following granularities: a terminal-device granularity, a frequency point granularity, a band granularity, a band combination granularity, or an FR granularity.

The terminal device 700 in embodiments of the disclosure can implement the corresponding functions of the terminal device in the foregoing method embodiments. For the processes, functions, implementations, and beneficial effects corresponding to various modules (sub-modules, units, or components, etc.) in the terminal device 700, reference can be made to the corresponding illustrations in the foregoing method embodiments, which are not repeated herein. It should be noted that, the functions described for various modules (sub-modules, units, or components, etc.) in the terminal device 700 of embodiments of the disclosure may be implemented by different modules (sub-modules, units, or components, etc.) or may be implemented by the same module (sub-module, unit, or component, etc.).

FIG. 9 is a schematic block diagram of a first network device 900 according to an embodiment of the disclosure. The first network device 900 may include a second communication unit 910. The second communication unit 910 is configured to receive a measurement result reported by a terminal device. The measurement result includes cell-level measurement results associated with at least two moments, and the measurement result is obtained by the terminal device based on determined measurement configuration information and the terminal device triggers reporting of the measurement result if a first prediction event is satisfied, where a first part of information in the measurement configuration information is obtained by receiving dedicated signaling sent by the first network device and a second part of information in the measurement configuration information is obtained in a default manner; or the measurement configuration information is obtained by receiving the dedicated signaling sent by the first network device; or the measurement configuration information is obtained in the default manner.

In some embodiments, the cell-level measurement results associated with at least two moments include a cell-level measurement result of each cell in a first cell set, and the first cell set includes one or more of: one or more cells indicated by the first network device via the dedicated signaling; all serving cells for the terminal device; all cells in a triggered-cell list recorded in a temporary variable stored in the terminal device if the first prediction event is satisfied; a cell which triggers the first prediction event; an intra-frequency neighbour cell of the cell which triggers the first prediction event; or an intra-frequency neighbour cell with the best measurement result associated with each serving cell in all the serving cells for the terminal device.

In some embodiments, the measurement configuration information includes one or more of: a second cell set, first indication information, first quantity information, second quantity information, length configuration information associated with a first time window, or prediction duration configuration information. The second cell set indicates a cell range for which the terminal device is allowed to report the cell-level measurement results associated with at least two moments. The first indication information indicates whether the terminal device needs to report the cell-level measurement results associated with at least two moments if the first prediction event is satisfied. The first quantity information indicates to the terminal device to report a cell-level measurement result associated with at most *n* history moments if the first prediction event is satisfied, where *n* is a positive integer and *n* is determined based on the first quantity information. The second quantity information indicates to the terminal device to report a cell-level measurement result associated with at most *m* future moments if the first prediction event is satisfied, where *m* is a positive integer and *m* is determined based on the second quantity information. The length configuration information associated with the first time window indicates a window length of the first time window, and the first time window is used to determine a range of the at most *n* history moments. The prediction duration configuration information indicates a window length of a second time window, the second time window is associated with the first prediction event, and the window length of the second time window is a duration between an estimated occurrence moment of a first event associated with the first prediction event and a trigger moment of the first prediction event.

In some embodiments, an end moment of the first time window is the trigger moment of the first prediction event, and a start moment of the first time window is determined based on the end moment of the first time window and the length configuration information associated with the first time window.

In some embodiments, the length configuration information associated with the first time window is configured at one or more of the following granularities: a terminal-device granularity, a frequency point granularity, a band granularity, a band combination granularity, or an FR granularity.

In some embodiments, a start moment of the second time window is the trigger moment of the first prediction event, and an end moment of the second time window is determined based on the start moment of the second time window and the prediction duration configuration information.

In some embodiments, the prediction duration configuration information is configured at one or more of the following granularities: a terminal-device granularity, a frequency point granularity, a band granularity, a band combination granularity, or an FR granularity.

In some embodiments, if the measurement configuration information includes the first quantity information, the cell-level measurement results associated with at least two moments include a cell-level measurement result associated with the trigger moment of the first prediction event and a cell-level measurement result associated with at most *n* history moments, where the at most *n* history moments each are a moment which is before the trigger moment of the first prediction event.

In some embodiments, if the measurement configuration information includes the first quantity information, the cell-level measurement results associated with at least two moments include a cell-level measurement result associated with the trigger moment of the first prediction event, a cell-level measurement result associated with the estimated occurrence moment of the first event associated with the first prediction event, and a cell-level measurement result associated with at most *n* history moments, where the at most *n* history moments each are a moment which is before the trigger moment of the first prediction event.

In some embodiments, if the measurement configuration information includes the first quantity information and the second quantity information, the cell-level measurement results associated with at least two moments include a cell-level measurement result associated with the trigger moment of the first prediction event, a cell-level measurement result associated with at most *n* history moments, and a cell-level measurement result associated with at most *m* future moments, where the at most *n* history moments each are a moment which is before the trigger moment of the first prediction event, and the at most *m* future moments each are a moment which is after the trigger moment of the first prediction event.

In some embodiments, if the measurement configuration information includes the first quantity information and the second quantity information, the cell-level measurement results associated with at least two moments include a cell-level measurement result associated with the trigger moment of the first prediction event, a cell-level measurement result associated with the estimated occurrence moment of the first event associated with the first prediction event, a cell-level measurement result associated with at most *n* history moments, and a cell-level measurement result associated with at most *m* future moments or (*m*-1) future moments, where the at most *n* history moments each are a moment which is before the trigger moment of the first prediction event, and the at most *m* future moments or (*m*-1) future moments each are a moment which is after the trigger moment of the first prediction event.

In some embodiments, if the measurement configuration information includes the second quantity information, the cell-level measurement results associated with at least two moments include a cell-level measurement result associated with the trigger moment of the first prediction event and a cell-level measurement result associated with at most *m* future moments, where the at most *m* future moments each are a moment which is after the trigger moment of the first prediction event.

In some embodiments, if the measurement configuration information includes the second quantity information, the cell-level measurement results associated with at least two moments include a cell-level measurement result associated with the trigger moment of the first prediction event, a cell-level measurement result associated with the estimated occurrence moment of the first event associated with the first prediction event, and a cell-level measurement result associated with at most *m* future moments or (*m*-1) future moments, where the at most *m* future moments or (*m*-1) future moments each are a moment which is after the trigger moment of the first prediction event.

In some embodiments, if the measurement configuration information includes the length configuration information associated with the first time window, any moment corresponding to the at most *n* history moments belongs to moments in the first time window.

In some embodiments, any moment corresponding to the at most *m* future moments belongs to moments in the second time window.

In some embodiments, the cell-level measurement results associated with at least two moments include a cell-level measurement result associated with a trigger moment of the first prediction event and a cell-level measurement result associated with an estimated occurrence moment of a first event associated with the first prediction event.

In some embodiments, the first prediction event includes one of the following: a first event being satisfied after a first duration elapsed starting from a current moment is predicted; a signal measurement result of a current serving cell is less than or equal to a first measurement threshold, and the first even being satisfied after a second duration elapsed starting from the current moment is predicted; or the signal measurement result of the current serving cell has been less than or equal to a second measurement threshold for a third duration, and the first event being satisfied after a fourth duration elapsed starting from the current moment is predicted. The first event is associated with the first prediction event.

In some embodiments, the first event includes one or more of the following: a signal measurement result of a serving cell is greater than or equal to a third measurement threshold; the signal measurement result of the serving cell is less than or equal to a fourth measurement threshold; a signal measurement result of a neighbour cell is greater than a signal measurement result of a PCell or a signal measurement result of a PSCell, and a difference between the signal measurement result of the neighbour cell and the signal measurement result of the PCell or the signal measurement result of PSCell is greater than or equal to a first offset; the signal measurement result of the neighbour cell is greater than or equal to a fifth measurement threshold; the signal measurement result of the PCell or the signal measurement result of the PSCell is less than or equal to a sixth measurement threshold, and the signal measurement result of the neighbour cell or a signal measurement result of an SCell is greater than or equal to a seventh measurement threshold; the signal measurement result of the neighbour cell is greater than or equal to the signal measurement result of the SCell, and a difference between the signal measurement result of the neighbour cell and the signal measurement result of the SCell is greater than or equal to a second offset; a distance between the terminal device and a first reference location is greater than or equal to a first distance threshold, and a distance between the terminal device and a second reference location is less than or equal to a second distance threshold; the distance between the terminal device and the first reference location is greater than or equal to a third distance threshold; the distance between the terminal device and the second reference location is less than or equal to a fourth distance threshold; a signal measurement result of an Inter RAT neighbour cell is greater than or equal to an eighth measurement threshold; the signal measurement result of the PCell is less than or equal to a ninth measurement threshold, and the signal measurement result of the Inter RAT neighbour cell is greater than or equal to a tenth measurement threshold; a periodical measurement reporting timer expires; a time reaches a first absolute time; or a fifth duration has elapsed since the measurement configuration information is successfully received.

In some embodiments, the second communication unit 910 is further configured to: receive capability indication information sent by the terminal device, where the capability indication information includes one or more of: first capability information or second capability information. The first capability information indicates to the first network device whether the terminal device supports performing a measurement reporting task based on the first prediction event. The second capability information indicates to the first network device whether the terminal device supports reporting the cell-level measurement results associated with at least two moments via the same measurement reporting message.

In some embodiments, the first capability information or the second capability information is indicated at one or more of the following granularities: a terminal-device granularity, a frequency point granularity, a band granularity, a band combination granularity, or an FR granularity.

In some embodiments, the second communication unit 910 is further configured to: the second communication unit is further configured to: send a handover preparation message to a second network device, where the second network device is a network device which a target cell for handover for the terminal device belongs to, the handover preparation message includes a cell-level measurement result for at least one history moment associated with the target cell, and/or a cell-level measurement result for at least one future moment associated with the target cell.

In some embodiments, the cell-level measurement result for at least one history moment associated with the target cell and/or the cell-level measurement result for at least one future moment associated with the target cell in the handover preparation message comes from the measurement result reported by the terminal device.

The first network device 900 in embodiments of the disclosure can implement the corresponding functions of the first network device in the foregoing method embodiments. For the processes, functions, implementations, and beneficial effects corresponding to various modules (sub-modules, units, or components, etc.) in the first network device 900, reference can be made to the corresponding illustrations in the foregoing method embodiments, which are not repeated herein. It should be noted that, the functions described for various modules (sub-modules, units, or components, etc.) in the first network device 900 of embodiments of the disclosure may be implemented by different modules (sub-modules, units, or components, etc.) or may be implemented by the same module (sub-module, unit, or component, etc.).

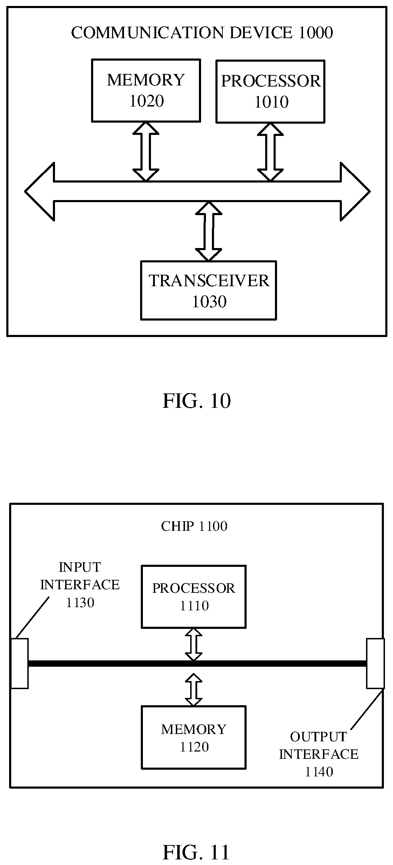

FIG. 10 is a schematic structural diagram of a communication device 1000 according to embodiments of the disclosure. The communication device 1000 includes a processor 1010. The processor 1010 can invoke and execute computer programs stored in a memory, to cause the communication device 1000 to implement the method in embodiments of the disclosure.

In an implementation, the communication device 1000 may further include a memory 1020, where the processor 1010 can invoke and execute computer programs stored in the memory 1020, to cause the communication device 1000 to implement the method in embodiments of the disclosure.

The memory 1020 may be a separate device independent of the processor 1010, or may be integrated into the processor 1010.

In an implementation, the communication device 1000 may further include a transceiver 1030. The processor 1010 can control the transceiver 1030 to communicate with other devices, and specifically, to send information or data to other devices or receive information or data sent by other devices.

The transceiver 1030 may include a transmitter and a receiver. The transceiver 1030 can further include an antenna, where one or more antennas may be provided.

In an implementation, the communication device 1000 may specifically be the first network device in embodiments of the disclosure, and the communication device 1000 may implement corresponding operations implemented by the first network device in various methods in embodiments of the disclosure, which will not be described again herein for the sake of brevity.

In an implementation, the communication device 1000 may specifically be the terminal device in embodiments of the disclosure, and the communication device 1000 may implement corresponding operations implemented by the terminal device in various methods in embodiments of the disclosure, which will not be described again herein for the sake of brevity.

FIG. 11 is a schematic structural diagram of a chip according to embodiments of the disclosure. The chip 1100 includes a processor 1110. The processor 1110 can invoke and execute computer programs stored in a memory, so as to implement the method in embodiments of the disclosure.

In an implementation, the chip 1100 may further include a memory 1120. The processor 1110 can invoke and execute computer programs stored in the memory 1120, so as to implement the method performed by a terminal device or a network device in embodiments of the disclosure.

The memory 1120 may be a separate device independent of the processor 1110, or may be integrated into the processor 1110.

In an implementation, the chip 1100 may further include an input interface 1130. The processor 1110 can control the input interface 1130 to communicate with other devices or chips, and specifically, to obtain information or data sent by other devices or chips.

In an implementation, the chip 1100 may further include an output interface 1140. The processor 1110 can control the output interface 1140 to communicate with other devices or chips, and specifically, to output information or data to other devices or chips.

In an implementation, the chip may be applied to the first network device in embodiments of the disclosure, and the chip may implement corresponding operations implemented by the first network device in various methods in embodiments of the disclosure, which will not be described again herein for the sake of brevity.

In an implementation, the chip may be applied to the terminal device in embodiments of the disclosure, and the chip may implement corresponding operations implemented by the terminal device in various methods in embodiments of the disclosure, which will not be described again herein for the sake of brevity.

A chip applied to a network device and a chip applied to a terminal device may be the same chip or different chips.

In an implementation, the chip in embodiments of the disclosure may also be a system-on-chip (SOC).

The processor described above may be a general-purpose processor, a digital signal processor (DSP), a field programmable gate array (FPGA), an application specific integrated circuit (ASIC), or other programmable logic devices, transistor logic devices, discrete hardware components. The general-purpose processor described above may be a microprocessor, or may be any conventional processor or the like.

The memory described above may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or flash memory. The volatile memory can be a random access memory (RAM).

It should be understood that, the memory above is intended for illustration rather than limitation. For example, the memory in embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a Direct Rambus RAM (DR RAM), etc. In other words, the memory in embodiments of the disclosure is intended to include, but is not limited to, these and any other suitable types of memory.

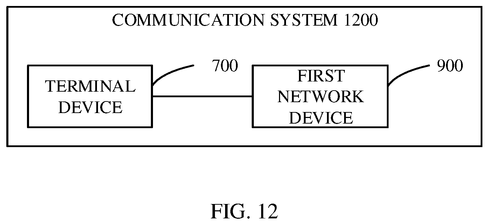

FIG. 12 is a schematic block diagram of a communication system 1200 according to embodiments of the disclosure. The communication system 1200 includes a terminal device 700 and a first network device 900.

Here, the terminal device 700 is configured to implement a corresponding function performed by the terminal device in the method described above, and the first network device 900 is configured to implement a corresponding function performed by the first network device in the method described above, which are not repeated herein for the sake of brevity.

All or some of the above embodiments can be implemented through software, hardware, firmware, or any other combination thereof. When implemented by software, all or some the above embodiments can be implemented in the form of a computer program product. The computer program product includes one or more computer instructions. When the computer instructions are applied and executed on a computer, all or some the operations or functions of the embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

It should be understood that, in various embodiments of the disclosure, the magnitude of a sequence number of each of the foregoing processes does not imply an execution order, and the execution order between the processes should be determined according to function and internal logic thereof, which shall not constitute any limitation to the implementation of embodiments of the disclosure.

It will be evident to those skilled in the art that, for the sake of convenience and brevity, in terms of the specific working processes of the foregoing systems, apparatuses, and units, reference can be made to the corresponding processes in the foregoing method embodiments, which will not be described in detail again herein.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A method for controlling measurement information reporting, applied to a terminal device and comprising:
determining measurement configuration information, wherein the measurement configuration information is used to control the terminal device to report a measurement result to a network device when a first prediction event is satisfied, and the measurement result comprises cell-level measurement results associated with at least two moments;
wherein a first part of information in the measurement configuration information is obtained by receiving dedicated signaling sent by the network device and a second part of information in the measurement configuration information is obtained in a default manner; or the measurement configuration information is obtained by receiving the dedicated signaling sent by the network device; or the measurement configuration information is obtained in the default manner.

2. The method of claim 1, wherein the cell-level measurement results associated with at least two moments comprise a cell-level measurement result of each cell in a first cell set, and the first cell set comprises one or more of:
one or more cells indicated by the network device via the dedicated signaling;
all serving cells for the terminal device;
all cells in a triggered-cell list recorded in a temporary variable stored in the terminal device when the first prediction event is satisfied;
a cell which triggers the first prediction event;
an intra-frequency neighbour cell of the cell which triggers the first prediction event; or
an intra-frequency neighbour cell with the best measurement result associated with each serving cell in all the serving cells for the terminal device.

3. The method of claim 1 or 2, wherein the measurement configuration information comprises one or more of:
a second cell set, wherein the second cell set indicates a cell range for which the terminal device is allowed to report the cell-level measurement results associated with at least two moments;
first indication information, wherein the first indication information indicates whether the terminal device needs to report the cell-level measurement results associated with at least two moments when the first prediction event is satisfied;
first quantity information, wherein the first quantity information indicates to the terminal device to report a cell-level measurement result associated with at most *n* history moments when the first prediction event is satisfied, wherein *n* is a positive integer and *n* is determined based on the first quantity information;
second quantity information, wherein the second quantity information indicates to the terminal device to report a cell-level measurement result associated with at most *m* future moments when the first prediction event is satisfied, wherein *m* is a positive integer and *m* is determined based on the second quantity information;
length configuration information associated with a first time window, wherein the length configuration information associated with the first time window indicates a window length of the first time window, and the first time window is used to determine a range of the at most *n* history moments; or
prediction duration configuration information, wherein the prediction duration configuration information indicates a window length of a second time window, the second time window is associated with the first prediction event, and the window length of the second time window is a duration between an estimated occurrence moment of a first event associated with the first prediction event and a trigger moment of the first prediction event.

4. The method of claim 3, wherein an end moment of the first time window is the trigger moment of the first prediction event, and a start moment of the first time window is determined based on the end moment of the first time window and the length configuration information associated with the first time window.

5. The method of claim 3 or 4, wherein the length configuration information associated with the first time window is configured at one or more of the following granularities:
a terminal-device granularity, a frequency point granularity, a band granularity, a band combination granularity, or a frequency range (FR) granularity.

6. The method of any one of claims 3 to 5, wherein a start moment of the second time window is the trigger moment of the first prediction event, and an end moment of the second time window is determined based on the start moment of the second time window and the prediction duration configuration information.

7. The method of any one of claims 3 to 6, wherein when the measurement configuration information comprises the first quantity information, the cell-level measurement results associated with at least two moments comprise a cell-level measurement result associated with the trigger moment of the first prediction event and a cell-level measurement result associated with at most *n* history moments, wherein the at most *n* history moments each are a moment which is before the trigger moment of the first prediction event.

8. The method of any one of claims 3 to 6, wherein when the measurement configuration information comprises the first quantity information, the cell-level measurement results associated with at least two moments comprise a cell-level measurement result associated with the trigger moment of the first prediction event, a cell-level measurement result associated with the estimated occurrence moment of the first event associated with the first prediction event, and a cell-level measurement result associated with at most *n* history moments, wherein the at most *n* history moments each are a moment which is before the trigger moment of the first prediction event.

9. The method of any one of claims 3 to 6, wherein when the measurement configuration information comprises the first quantity information and the second quantity information, the cell-level measurement results associated with at least two moments comprise a cell-level measurement result associated with the trigger moment of the first prediction event, a cell-level measurement result associated with at most *n* history moments, and a cell-level measurement result associated with at most *m* future moments, wherein the at most *n* history moments each are a moment which is before the trigger moment of the first prediction event, and the at most *m* future moments each are a moment which is after the trigger moment of the first prediction event.

10. The method of any one of claims 3 to 6, wherein when the measurement configuration information comprises the first quantity information and the second quantity information, the cell-level measurement results associated with at least two moments comprise a cell-level measurement result associated with the trigger moment of the first prediction event, a cell-level measurement result associated with the estimated occurrence moment of the first event associated with the first prediction event, a cell-level measurement result associated with at most *n* history moments, and a cell-level measurement result associated with at most *m* future moments or (*m*-1) future moments, wherein the at most *n* history moments each are a moment which is before the trigger moment of the first prediction event, and the at most *m* future moments or (*m*-1) future moments each are a moment which is after the trigger moment of the first prediction event.

11. The method of any one of claims 3 to 6, wherein when the measurement configuration information comprises the second quantity information, the cell-level measurement results associated with at least two moments comprise a cell-level measurement result associated with the trigger moment of the first prediction event and a cell-level measurement result associated with at most *m* future moments, wherein the at most *m* future moments each are a moment which is after the trigger moment of the first prediction event.

12. The method of any one of claims 3 to 6, wherein when the measurement configuration information comprises the second quantity information, the cell-level measurement results associated with at least two moments comprise a cell-level measurement result associated with the trigger moment of the first prediction event, a cell-level measurement result associated with the estimated occurrence moment of the first event associated with the first prediction event, and a cell-level measurement result associated with at most *m* future moments or (*m*-1) future moments, wherein the at most *m* future moments or (*m*-1) future moments each are a moment which is after the trigger moment of the first prediction event.

13. The method of any one of claims 3 to 12, wherein when the measurement configuration information comprises the length configuration information associated with the first time window, any moment corresponding to the at most *n* history moments belongs to moments in the first time window.

14. The method of any one of claims 3 to 13, wherein any moment corresponding to the at most *m* future moments belongs to moments in the second time window.

15. The method of any one of claims 1 to 14, wherein the cell-level measurement results associated with at least two moments comprise a cell-level measurement result associated with a trigger moment of the first prediction event and a cell-level measurement result associated with an estimated occurrence moment of a first event associated with the first prediction event.

16. The method of any one of claims 1 to 15, wherein the first prediction event comprises one of:
a first event being satisfied after a first duration elapsed starting from a current moment is predicted;
a signal measurement result of a current serving cell is less than or equal to a first measurement threshold, and the first even being satisfied after a second duration elapsed starting from the current moment is predicted; or
the signal measurement result of the current serving cell has been less than or equal to a second measurement threshold for a third duration, and the first event being satisfied after a fourth duration elapsed starting from the current moment is predicted;
wherein the first event is associated with the first prediction event.

17. The method of claim 16, wherein the first event comprises one or more of:
a signal measurement result of a serving cell is greater than or equal to a third measurement threshold;
the signal measurement result of the serving cell is less than or equal to a fourth measurement threshold;
a signal measurement result of a neighbour cell is greater than a signal measurement result of a primary cell (PCell) or a signal measurement result of a primary secondary cell (PSCell), and a difference between the signal measurement result of the neighbour cell and the signal measurement result of the PCell or the signal measurement result of PSCell is greater than or equal to a first offset;
the signal measurement result of the neighbour cell is greater than or equal to a fifth measurement threshold;
the signal measurement result of the PCell or the signal measurement result of the PSCell is less than or equal to a sixth measurement threshold, and the signal measurement result of the neighbour cell or a signal measurement result of a secondary cell (SCell) is greater than or equal to a seventh measurement threshold;
the signal measurement result of the neighbour cell is greater than or equal to the signal measurement result of the SCell, and a difference between the signal measurement result of the neighbour cell and the signal measurement result of the SCell is greater than or equal to a second offset;
a distance between the terminal device and a first reference location is greater than or equal to a first distance threshold, and a distance between the terminal device and a second reference location is less than or equal to a second distance threshold;
the distance between the terminal device and the first reference location is greater than or equal to a third distance threshold;
the distance between the terminal device and the second reference location is less than or equal to a fourth distance threshold;
a signal measurement result of an inter-radio access technology (Inter RAT) neighbour cell is greater than or equal to an eighth measurement threshold;
the signal measurement result of the PCell is less than or equal to a ninth measurement threshold, and the signal measurement result of the Inter RAT neighbour cell is greater than or equal to a tenth measurement threshold;
a periodical measurement reporting timer expires;
a time reaches a first absolute time; or
a fifth duration has elapsed since the measurement configuration information is successfully received.

18. The method of any one of claims 1 to 17, further comprising:
sending capability indication information to the network device, wherein the capability indication information comprises one or more of:
first capability information, wherein the first capability information indicates to the network device whether the terminal device supports performing a measurement reporting task based on the first prediction event; or
second capability information, wherein the second capability information indicates to the network device whether the terminal device supports reporting the cell-level measurement results associated with at least two moments via the same measurement reporting message.

19. The method of claim 18, wherein the first capability information or the second capability information is indicated at one or more of the following granularities:
a terminal-device granularity, a frequency point granularity, a band granularity, a band combination granularity, or an FR granularity.

20. A method for controlling measurement information reporting, applied to a first network device and comprising:
receiving a measurement result reported by a terminal device, wherein the measurement result comprises cell-level measurement results associated with at least two moments, and the measurement result is obtained by the terminal device based on determined measurement configuration information and the terminal device triggers reporting of the measurement result when a first prediction event is satisfied;
wherein a first part of information in the measurement configuration information is obtained by receiving dedicated signaling sent by the first network device and a second part of information in the measurement configuration information is obtained in a default manner; or the measurement configuration information is obtained by receiving the dedicated signaling sent by the first network device; or the measurement configuration information is obtained in the default manner.

21. The method of claim 20, wherein the cell-level measurement results associated with at least two moments comprise a cell-level measurement result of each cell in a first cell set, and the first cell set comprises one or more of:
one or more cells indicated by the first network device via the dedicated signaling;
all serving cells for the terminal device;
all cells in a triggered-cell list recorded in a temporary variable stored in the terminal device when the first prediction event is satisfied;
a cell which triggers the first prediction event;
an intra-frequency neighbour cell of the cell which triggers the first prediction event; or
an intra-frequency neighbour cell with the best measurement result associated with each serving cell in all the serving cells for the terminal device.

22. The method of claim 20 or 21, wherein the measurement configuration information comprises one or more of:
a second cell set, wherein the second cell set indicates a cell range for which the terminal device is allowed to report the cell-level measurement results associated with at least two moments;
first indication information, wherein the first indication information indicates whether the terminal device needs to report the cell-level measurement results associated with at least two moments when the first prediction event is satisfied;
first quantity information, wherein the first quantity information indicates to the terminal device to report a cell-level measurement result associated with at most *n* history moments when the first prediction event is satisfied, wherein *n* is a positive integer and *n* is determined based on the first quantity information;
second quantity information, wherein the second quantity information indicates to the terminal device to report a cell-level measurement result associated with at most *m* future moments when the first prediction event is satisfied, wherein *m* is a positive integer and *m* is determined based on the second quantity information;
length configuration information associated with a first time window, wherein the length configuration information associated with the first time window indicates a window length of the first time window, and the first time window is used to determine a range of the at most *n* history moments; or
prediction duration configuration information, wherein the prediction duration configuration information indicates a window length of a second time window, the second time window is associated with the first prediction event, and the window length of the second time window is a duration between an estimated occurrence moment of a first event associated with the first prediction event and a trigger moment of the first prediction event.

23. The method of claim 22, wherein an end moment of the first time window is the trigger moment of the first prediction event, and a start moment of the first time window is determined based on the end moment of the first time window and the length configuration information associated with the first time window.

24. The method of claim 22 or 23, wherein the length configuration information associated with the first time window is configured at one or more of the following granularities:
a terminal-device granularity, a frequency point granularity, a band granularity, a band combination granularity, or a frequency range (FR) granularity.

25. The method of any one of claims 22 to 24, wherein a start moment of the second time window is the trigger moment of the first prediction event, and an end moment of the second time window is determined based on the start moment of the second time window and the prediction duration configuration information.

26. The method of any one of claims 22 to 25, wherein when the measurement configuration information comprises the first quantity information, the cell-level measurement results associated with at least two moments comprise a cell-level measurement result associated with the trigger moment of the first prediction event and a cell-level measurement result associated with at most *n* history moments, wherein the at most *n* history moments each are a moment which is before the trigger moment of the first prediction event.

27. The method of any one of claims 22 to 25, wherein when the measurement configuration information comprises the first quantity information, the cell-level measurement results associated with at least two moments comprise a cell-level measurement result associated with the trigger moment of the first prediction event, a cell-level measurement result associated with the estimated occurrence moment of the first event associated with the first prediction event, and a cell-level measurement result associated with at most *n* history moments, wherein the at most *n* history moments each are a moment which is before the trigger moment of the first prediction event.

28. The method of any one of claims 22 to 25, wherein when the measurement configuration information comprises the first quantity information and the second quantity information, the cell-level measurement results associated with at least two moments comprise a cell-level measurement result associated with the trigger moment of the first prediction event, a cell-level measurement result associated with at most *n* history moments, and a cell-level measurement result associated with at most *m* future moments, wherein the at most *n* history moments each are a moment which is before the trigger moment of the first prediction event, and the at most *m* future moments each are a moment which is after the trigger moment of the first prediction event.

29. The method of any one of claims 22 to 25, wherein when the measurement configuration information comprises the first quantity information and the second quantity information, the cell-level measurement results associated with at least two moments comprise a cell-level measurement result associated with the trigger moment of the first prediction event, a cell-level measurement result associated with the estimated occurrence moment of the first event associated with the first prediction event, a cell-level measurement result associated with at most *n* history moments, and a cell-level measurement result associated with at most *m* future moments or (*m*-1) future moments, wherein the at most *n* history moments each are a moment which is before the trigger moment of the first prediction event, and the at most *m* future moments or (*m*-1) future moments each are a moment which is after the trigger moment of the first prediction event.

30. The method of any one of claims 22 to 25, wherein when the measurement configuration information comprises the second quantity information, the cell-level measurement results associated with at least two moments comprise a cell-level measurement result associated with the trigger moment of the first prediction event and a cell-level measurement result associated with at most *m* future moments, wherein the at most *m* future moments each are a moment which is after the trigger moment of the first prediction event.

31. The method of any one of claims 22 to 25, wherein when the measurement configuration information comprises the second quantity information, the cell-level measurement results associated with at least two moments comprise a cell-level measurement result associated with the trigger moment of the first prediction event, a cell-level measurement result associated with the estimated occurrence moment of the first event associated with the first prediction event, and a cell-level measurement result associated with at most *m* future moments or (*m*-1) future moments, wherein the at most *m* future moments or (*m*-1) future moments each are a moment which is after the trigger moment of the first prediction event.

32. The method of any one of claims 22 to 31, wherein when the measurement configuration information comprises the length configuration information associated with the first time window, any moment corresponding to the at most *n* history moments belongs to moments in the first time window.

33. The method of any one of claims 22 to 31, wherein any moment corresponding to the at most *m* future moments belongs to moments in the second time window.

34. The method of any one of claims 20 to 33, wherein the cell-level measurement results associated with at least two moments comprise a cell-level measurement result associated with a trigger moment of the first prediction event and a cell-level measurement result associated with an estimated occurrence moment of a first event associated with the first prediction event.

35. The method of any one of claims 20 to 34, wherein the first prediction event comprises one of:
a first event being satisfied after a first duration elapsed starting from a current moment is predicted;
a signal measurement result of a current serving cell is less than or equal to a first measurement threshold, and the first even being satisfied after a second duration elapsed starting from the current moment is predicted; or
the signal measurement result of the current serving cell has been less than or equal to a second measurement threshold for a third duration, and the first event being satisfied after a fourth duration elapsed starting from the current moment is predicted;
wherein the first event is associated with the first prediction event.

36. The method of claim 35, wherein the first event comprises one or more of:
a signal measurement result of a serving cell is greater than or equal to a third measurement threshold;
the signal measurement result of the serving cell is less than or equal to a fourth measurement threshold;
a signal measurement result of a neighbour cell is greater than a signal measurement result of a primary cell (PCell) or a signal measurement result of a primary secondary cell (PSCell), and a difference between the signal measurement result of the neighbour cell and the signal measurement result of the PCell or the signal measurement result of PSCell is greater than or equal to a first offset;
the signal measurement result of the neighbour cell is greater than or equal to a fifth measurement threshold;
the signal measurement result of the PCell or the signal measurement result of the PSCell is less than or equal to a sixth measurement threshold, and the signal measurement result of the neighbour cell or a signal measurement result of a secondary cell (SCell) is greater than or equal to a seventh measurement threshold;
the signal measurement result of the neighbour cell is greater than or equal to the signal measurement result of the SCell, and a difference between the signal measurement result of the neighbour cell and the signal measurement result of the SCell is greater than or equal to a second offset;
a distance between the terminal device and a first reference location is greater than or equal to a first distance threshold, and a distance between the terminal device and a second reference location is less than or equal to a second distance threshold;
the distance between the terminal device and the first reference location is greater than or equal to a third distance threshold;
the distance between the terminal device and the second reference location is less than or equal to a fourth distance threshold;
a signal measurement result of an inter-radio access technology (Inter RAT) neighbour cell is greater than or equal to an eighth measurement threshold;
the signal measurement result of the PCell is less than or equal to a ninth measurement threshold, and the signal measurement result of the Inter RAT neighbour cell is greater than or equal to a tenth measurement threshold;
a periodical measurement reporting timer expires;
a time reaches a first absolute time; or
a fifth duration has elapsed since the measurement configuration information is successfully received.

37. The method of any one of claims 20 to 36, further comprising:
receiving capability indication information sent by the terminal device, wherein the capability indication information comprises one or more of:
first capability information, wherein the first capability information indicates to the first network device whether the terminal device supports performing a measurement reporting task based on the first prediction event; or
second capability information, wherein the second capability information indicates to the first network device whether the terminal device supports reporting the cell-level measurement results associated with at least two moments via the same measurement reporting message.

38. The method of claim 37, wherein the first capability information or the second capability information is indicated at one or more of the following granularities:
a terminal-device granularity, a frequency point granularity, a band granularity, a band combination granularity, or an FR granularity.

39. The method of any one of claims 20 to 38, further comprising:
sending a handover preparation message to a second network device, wherein the second network device is a network device which a target cell for handover for the terminal device belongs to, the handover preparation message comprises a cell-level measurement result for at least one history moment associated with the target cell, and/or a cell-level measurement result for at least one future moment associated with the target cell.

40. The method of claim 39, wherein the cell-level measurement result for at least one history moment associated with the target cell and/or the cell-level measurement result for at least one future moment associated with the target cell in the handover preparation message comes from the measurement result reported by the terminal device.

41. A terminal device, comprising:
a first processing unit configured to determine measurement configuration information, wherein the measurement configuration information is used to control the terminal device to report a measurement result to a network device when a first prediction event is satisfied, and the measurement result comprises cell-level measurement results associated with at least two moments;
wherein a first part of information in the measurement configuration information is obtained by receiving dedicated signaling sent by the network device and a second part of information in the measurement configuration information is obtained in a default manner; or the measurement configuration information is obtained by receiving the dedicated signaling sent by the network device; or the measurement configuration information is obtained in the default manner.

42. The terminal device of claim 41, wherein the cell-level measurement results associated with at least two moments comprise a cell-level measurement result of each cell in a first cell set, and the first cell set comprises one or more of:
one or more cells indicated by the network device via the dedicated signaling;
all serving cells for the terminal device;
all cells in a triggered-cell list recorded in a temporary variable stored in the terminal device when the first prediction event is satisfied;
a cell which triggers the first prediction event;
an intra-frequency neighbour cell of the cell which triggers the first prediction event; or
an intra-frequency neighbour cell with the best measurement result associated with each serving cell in all the serving cells for the terminal device.

43. The terminal device of claim 41 or 42, wherein the measurement configuration information comprises one or more of:
a second cell set, wherein the second cell set indicates a cell range for which the terminal device is allowed to report the cell-level measurement results associated with at least two moments;
first indication information, wherein the first indication information indicates whether the terminal device needs to report the cell-level measurement results associated with at least two moments when the first prediction event is satisfied;
first quantity information, wherein the first quantity information indicates to the terminal device to report a cell-level measurement result associated with at most *n* history moments when the first prediction event is satisfied, wherein *n* is a positive integer and *n* is determined based on the first quantity information;
second quantity information, wherein the second quantity information indicates to the terminal device to report a cell-level measurement result associated with at most *m* future moments when the first prediction event is satisfied, wherein *m* is a positive integer and *m* is determined based on the second quantity information;
length configuration information associated with a first time window, wherein the length configuration information associated with the first time window indicates a window length of the first time window, and the first time window is used to determine a range of the at most *n* history moments; or
prediction duration configuration information, wherein the prediction duration configuration information indicates a window length of a second time window, the second time window is associated with the first prediction event, and the window length of the second time window is a duration between an estimated occurrence moment of a first event associated with the first prediction event and a trigger moment of the first prediction event.

44. The terminal device of claim 43, wherein an end moment of the first time window is the trigger moment of the first prediction event, and a start moment of the first time window is determined based on the end moment of the first time window and the length configuration information associated with the first time window.

45. The terminal device of claim 43 or 44, wherein the length configuration information associated with the first time window is configured at one or more of the following granularities:
a terminal-device granularity, a frequency point granularity, a band granularity, a band combination granularity, or a frequency range (FR) granularity.

46. The terminal device of any one of claims 43 to 45, wherein a start moment of the second time window is the trigger moment of the first prediction event, and an end moment of the second time window is determined based on the start moment of the second time window and the prediction duration configuration information.

47. The terminal device of any one of claims 43 to 46, wherein when the measurement configuration information comprises the first quantity information, the cell-level measurement results associated with at least two moments comprise a cell-level measurement result associated with the trigger moment of the first prediction event and a cell-level measurement result associated with at most *n* history moments, wherein the at most *n* history moments each are a moment which is before the trigger moment of the first prediction event.

48. The terminal device of any one of claims 43 to 46, wherein when the measurement configuration information comprises the first quantity information, the cell-level measurement results associated with at least two moments comprise a cell-level measurement result associated with the trigger moment of the first prediction event, a cell-level measurement result associated with the estimated occurrence moment of the first event associated with the first prediction event, and a cell-level measurement result associated with at most *n* history moments, wherein the at most *n* history moments each are a moment which is before the trigger moment of the first prediction event.

49. The terminal device of any one of claims 43 to 46, wherein when the measurement configuration information comprises the first quantity information and the second quantity information, the cell-level measurement results associated with at least two moments comprise a cell-level measurement result associated with the trigger moment of the first prediction event, a cell-level measurement result associated with at most *n* history moments, and a cell-level measurement result associated with at most *m* future moments, wherein the at most *n* history moments each are a moment which is before the trigger moment of the first prediction event, and the at most *m* future moments each are a moment which is after the trigger moment of the first prediction event.

50. The terminal device of any one of claims 43 to 46, wherein when the measurement configuration information comprises the first quantity information and the second quantity information, the cell-level measurement results associated with at least two moments comprise a cell-level measurement result associated with the trigger moment of the first prediction event, a cell-level measurement result associated with the estimated occurrence moment of the first event associated with the first prediction event, a cell-level measurement result associated with at most *n* history moments, and a cell-level measurement result associated with at most *m* future moments or (*m*-1) future moments, wherein the at most *n* history moments each are a moment which is before the trigger moment of the first prediction event, and the at most *m* future moments or (*m*-1) future moments each are a moment which is after the trigger moment of the first prediction event.

51. The terminal device of any one of claims 43 to 46, wherein when the measurement configuration information comprises the second quantity information, the cell-level measurement results associated with at least two moments comprise a cell-level measurement result associated with the trigger moment of the first prediction event and a cell-level measurement result associated with at most *m* future moments, wherein the at most *m* future moments each are a moment which is after the trigger moment of the first prediction event.

52. The terminal device of any one of claims 43 to 46, wherein when the measurement configuration information comprises the second quantity information, the cell-level measurement results associated with at least two moments comprise a cell-level measurement result associated with the trigger moment of the first prediction event, a cell-level measurement result associated with the estimated occurrence moment of the first event associated with the first prediction event, and a cell-level measurement result associated with at most *m* future moments or (*m*-1) future moments, wherein the at most *m* future moments or (*m*-1) future moments each are a moment which is after the trigger moment of the first prediction event.

53. The terminal device of any one of claims 43 to 52, wherein when the measurement configuration information comprises the length configuration information associated with the first time window, any moment corresponding to the at most *n* history moments belongs to moments in the first time window.

54. The terminal device of any one of claims 43 to 53, wherein any moment corresponding to the at most *m* future moments belongs to moments in the second time window.

55. The terminal device of any one of claims 41 to 54, wherein the cell-level measurement results associated with at least two moments comprise a cell-level measurement result associated with a trigger moment of the first prediction event and a cell-level measurement result associated with an estimated occurrence moment of a first event associated with the first prediction event.

56. The terminal device of any one of claims 41 to 55, wherein the first prediction event comprises one of:
a first event being satisfied after a first duration elapsed starting from a current moment is predicted;
a signal measurement result of a current serving cell is less than or equal to a first measurement threshold, and the first even being satisfied after a second duration elapsed starting from the current moment is predicted; or
the signal measurement result of the current serving cell has been less than or equal to a second measurement threshold for a third duration, and the first event being satisfied after a fourth duration elapsed starting from the current moment is predicted;
wherein the first event is associated with the first prediction event.

57. The terminal device of claim 56, wherein the first event comprises one or more of:
a signal measurement result of a serving cell is greater than or equal to a third measurement threshold;
the signal measurement result of the serving cell is less than or equal to a fourth measurement threshold;
a signal measurement result of a neighbour cell is greater than a signal measurement result of a primary cell (PCell) or a signal measurement result of a primary secondary cell (PSCell), and a difference between the signal measurement result of the neighbour cell and the signal measurement result of the PCell or the signal measurement result of PSCell is greater than or equal to a first offset;
the signal measurement result of the neighbour cell is greater than or equal to a fifth measurement threshold;
the signal measurement result of the PCell or the signal measurement result of the PSCell is less than or equal to a sixth measurement threshold, and the signal measurement result of the neighbour cell or a signal measurement result of a secondary cell (SCell) is greater than or equal to a seventh measurement threshold;
the signal measurement result of the neighbour cell is greater than or equal to the signal measurement result of the SCell, and a difference between the signal measurement result of the neighbour cell and the signal measurement result of the SCell is greater than or equal to a second offset;
a distance between the terminal device and a first reference location is greater than or equal to a first distance threshold, and a distance between the terminal device and a second reference location is less than or equal to a second distance threshold;
the distance between the terminal device and the first reference location is greater than or equal to a third distance threshold;
the distance between the terminal device and the second reference location is less than or equal to a fourth distance threshold;
a signal measurement result of an inter-radio access technology (Inter RAT) neighbour cell is greater than or equal to an eighth measurement threshold;
the signal measurement result of the PCell is less than or equal to a ninth measurement threshold, and the signal measurement result of the Inter RAT neighbour cell is greater than or equal to a tenth measurement threshold;
a periodical measurement reporting timer expires;
a time reaches a first absolute time; or
a fifth duration has elapsed since the measurement configuration information is successfully received.

58. The terminal device of any one of claims 41 to 57, further comprising:
a first communication unit configured to send capability indication information to the network device, wherein the capability indication information comprises one or more of:
first capability information, wherein the first capability information indicates to the network device whether the terminal device supports performing a measurement reporting task based on the first prediction event; or
second capability information, wherein the second capability information indicates to the network device whether the terminal device supports reporting the cell-level measurement results associated with at least two moments via the same measurement reporting message.

59. The terminal device of claim 58, wherein the first capability information or the second capability information is indicated at one or more of the following granularities:
a terminal-device granularity, a frequency point granularity, a band granularity, a band combination granularity, or an FR granularity.

60. A first network device, comprising:
a second communication unit configured to receive a measurement result reported by a terminal device, wherein the measurement result comprises cell-level measurement results associated with at least two moments, and the measurement result is obtained by the terminal device based on determined measurement configuration information and the terminal device triggers reporting of the measurement result when a first prediction event is satisfied;
wherein a first part of information in the measurement configuration information is obtained by receiving dedicated signaling sent by the first network device and a second part of information in the measurement configuration information is obtained in a default manner; or the measurement configuration information is obtained by receiving the dedicated signaling sent by the first network device; or the measurement configuration information is obtained in the default manner.

61. The first network device of claim 60, wherein the cell-level measurement results associated with at least two moments comprise a cell-level measurement result of each cell in a first cell set, and the first cell set comprises one or more of:
one or more cells indicated by the first network device via the dedicated signaling;
all serving cells for the terminal device;
all cells in a triggered-cell list recorded in a temporary variable stored in the terminal device when the first prediction event is satisfied;
a cell which triggers the first prediction event;
an intra-frequency neighbour cell of the cell which triggers the first prediction event; or
an intra-frequency neighbour cell with the best measurement result associated with each serving cell in all the serving cells for the terminal device.

62. The first network device of claim 60 or 61, wherein the measurement configuration information comprises one or more of:
a second cell set, wherein the second cell set indicates a cell range for which the terminal device is allowed to report the cell-level measurement results associated with at least two moments;
first indication information, wherein the first indication information indicates whether the terminal device needs to report the cell-level measurement results associated with at least two moments when the first prediction event is satisfied;
first quantity information, wherein the first quantity information indicates to the terminal device to report a cell-level measurement result associated with at most *n* history moments when the first prediction event is satisfied, wherein *n* is a positive integer and *n* is determined based on the first quantity information;
second quantity information, wherein the second quantity information indicates to the terminal device to report a cell-level measurement result associated with at most *m* future moments when the first prediction event is satisfied, wherein *m* is a positive integer and *m* is determined based on the second quantity information;
length configuration information associated with a first time window, wherein the length configuration information associated with the first time window indicates a window length of the first time window, and the first time window is used to determine a range of the at most *n* history moments; or
prediction duration configuration information, wherein the prediction duration configuration information indicates a window length of a second time window, the second time window is associated with the first prediction event, and the window length of the second time window is a duration between an estimated occurrence moment of a first event associated with the first prediction event and a trigger moment of the first prediction event.

63. The first network device of claim 62, wherein an end moment of the first time window is the trigger moment of the first prediction event, and a start moment of the first time window is determined based on the end moment of the first time window and the length configuration information associated with the first time window.

64. The first network device of claim 62 or 63, wherein the length configuration information associated with the first time window is configured at one or more of the following granularities:
a terminal-device granularity, a frequency point granularity, a band granularity, a band combination granularity, or a frequency range (FR) granularity.

65. The first network device of any one of claims 62 to 64, wherein a start moment of the second time window is the trigger moment of the first prediction event, and an end moment of the second time window is determined based on the start moment of the second time window and the prediction duration configuration information.

66. The first network device of any one of claims 62 to 65, wherein when the measurement configuration information comprises the first quantity information, the cell-level measurement results associated with at least two moments comprise a cell-level measurement result associated with the trigger moment of the first prediction event and a cell-level measurement result associated with at most *n* history moments, wherein the at most *n* history moments each are a moment which is before the trigger moment of the first prediction event.

67. The first network device of any one of claims 62 to 65, wherein when the measurement configuration information comprises the first quantity information, the cell-level measurement results associated with at least two moments comprise a cell-level measurement result associated with the trigger moment of the first prediction event, a cell-level measurement result associated with the estimated occurrence moment of the first event associated with the first prediction event, and a cell-level measurement result associated with at most *n* history moments, wherein the at most *n* history moments each are a moment which is before the trigger moment of the first prediction event.

68. The first network device of any one of claims 62 to 65, wherein when the measurement configuration information comprises the first quantity information and the second quantity information, the cell-level measurement results associated with at least two moments comprise a cell-level measurement result associated with the trigger moment of the first prediction event, a cell-level measurement result associated with at most *n* history moments, and a cell-level measurement result associated with at most *m* future moments, wherein the at most *n* history moments each are a moment which is before the trigger moment of the first prediction event, and the at most *m* future moments each are a moment which is after the trigger moment of the first prediction event.

69. The first network device of any one of claims 62 to 65, wherein when the measurement configuration information comprises the first quantity information and the second quantity information, the cell-level measurement results associated with at least two moments comprise a cell-level measurement result associated with the trigger moment of the first prediction event, a cell-level measurement result associated with the estimated occurrence moment of the first event associated with the first prediction event, a cell-level measurement result associated with at most *n* history moments, and a cell-level measurement result associated with at most *m* future moments or (*m*-1) future moments, wherein the at most *n* history moments each are a moment which is before the trigger moment of the first prediction event, and the at most *m* future moments or (*m*-1) future moments each are a moment which is after the trigger moment of the first prediction event.

70. The first network device of any one of claims 62 to 65, wherein when the measurement configuration information comprises the second quantity information, the cell-level measurement results associated with at least two moments comprise a cell-level measurement result associated with the trigger moment of the first prediction event and a cell-level measurement result associated with at most *m* future moments, wherein the at most *m* future moments each are a moment which is after the trigger moment of the first prediction event.

71. The first network device of any one of claims 62 to 65, wherein when the measurement configuration information comprises the second quantity information, the cell-level measurement results associated with at least two moments comprise a cell-level measurement result associated with the trigger moment of the first prediction event, a cell-level measurement result associated with the estimated occurrence moment of the first event associated with the first prediction event, and a cell-level measurement result associated with at most *m* future moments or (*m*-1) future moments, wherein the at most *m* future moments or (*m*-1) future moments each are a moment which is after the trigger moment of the first prediction event.

72. The first network device of any one of claims 62 to 71, wherein when the measurement configuration information comprises the length configuration information associated with the first time window, any moment corresponding to the at most *n* history moments belongs to moments in the first time window.

73. The first network device of any one of claims 62 to 71, wherein any moment corresponding to the at most *m* future moments belongs to moments in the second time window.

74. The first network device of any one of claims 60 to 73, wherein the cell-level measurement results associated with at least two moments comprise a cell-level measurement result associated with a trigger moment of the first prediction event and a cell-level measurement result associated with an estimated occurrence moment of a first event associated with the first prediction event.

75. The first network device of any one of claims 60 to 74, wherein the first prediction event comprises one of:
a first event being satisfied after a first duration elapsed starting from a current moment is predicted;
a signal measurement result of a current serving cell is less than or equal to a first measurement threshold, and the first even being satisfied after a second duration elapsed starting from the current moment is predicted; or
the signal measurement result of the current serving cell has been less than or equal to a second measurement threshold for a third duration, and the first event being satisfied after a fourth duration elapsed starting from the current moment is predicted;
wherein the first event is associated with the first prediction event.

76. The first network device of claim 75, wherein the first event comprises one or more of:
a signal measurement result of a serving cell is greater than or equal to a third measurement threshold;
the signal measurement result of the serving cell is less than or equal to a fourth measurement threshold;
a signal measurement result of a neighbour cell is greater than a signal measurement result of a primary cell (PCell) or a signal measurement result of a primary secondary cell (PSCell), and a difference between the signal measurement result of the neighbour cell and the signal measurement result of the PCell or the signal measurement result of PSCell is greater than or equal to a first offset;
the signal measurement result of the neighbour cell is greater than or equal to a fifth measurement threshold;
the signal measurement result of the PCell or the signal measurement result of the PSCell is less than or equal to a sixth measurement threshold, and the signal measurement result of the neighbour cell or a signal measurement result of a secondary cell (SCell) is greater than or equal to a seventh measurement threshold;
the signal measurement result of the neighbour cell is greater than or equal to the signal measurement result of the SCell, and a difference between the signal measurement result of the neighbour cell and the signal measurement result of the SCell is greater than or equal to a second offset;
a distance between the terminal device and a first reference location is greater than or equal to a first distance threshold, and a distance between the terminal device and a second reference location is less than or equal to a second distance threshold;
the distance between the terminal device and the first reference location is greater than or equal to a third distance threshold;
the distance between the terminal device and the second reference location is less than or equal to a fourth distance threshold;
a signal measurement result of an inter-radio access technology (Inter RAT) neighbour cell is greater than or equal to an eighth measurement threshold;
the signal measurement result of the PCell is less than or equal to a ninth measurement threshold, and the signal measurement result of the Inter RAT neighbour cell is greater than or equal to a tenth measurement threshold;
a periodical measurement reporting timer expires;
a time reaches a first absolute time; or
a fifth duration has elapsed since the measurement configuration information is successfully received.

77. The first network device of any one of claims 60 to 76, wherein the second communication unit is further configured to:
receive capability indication information sent by the terminal device, wherein the capability indication information comprises one or more of:
first capability information, wherein the first capability information indicates to the first network device whether the terminal device supports performing a measurement reporting task based on the first prediction event; or
second capability information, wherein the second capability information indicates to the first network device whether the terminal device supports reporting the cell-level measurement results associated with at least two moments via the same measurement reporting message.

78. The first network device of claim 77, wherein the first capability information or the second capability information is indicated at one or more of the following granularities:
a terminal-device granularity, a frequency point granularity, a band granularity, a band combination granularity, or an FR granularity.

79. The first network device of any one of claims 60 to 78, wherein the second communication unit is further configured to:
send a handover preparation message to a second network device, wherein the second network device is a network device which a target cell for handover for the terminal device belongs to, the handover preparation message comprises a cell-level measurement result for at least one history moment associated with the target cell, and/or a cell-level measurement result for at least one future moment associated with the target cell.

80. The first network device of claim 79, wherein the cell-level measurement result for at least one history moment associated with the target cell and/or the cell-level measurement result for at least one future moment associated with the target cell in the handover preparation message comes from the measurement result reported by the terminal device.

81. A terminal device, comprising:
a memory configured to store computer programs;
a transceiver configured to communicate with other devices; and
a processor configured to invoke and execute the computer programs stored in the memory, to cause the terminal device to perform the method of any one of claims 1 to 19.

82. A first network device, comprising:
a memory configured to store computer programs;
a transceiver configured to communicate with other devices; and
a processor configured to invoke and execute the computer programs stored in the memory, to cause the first network device to perform the method of any one of claims 20 to 40.

83. A chip, comprising:
a processor configured to invoke and execute computer programs from a memory, to cause a device equipped with the chip to perform the method of any one of claims 1 to 19.

84. A chip, comprising:
a processor configured to invoke and execute computer programs from a memory, to cause a device equipped with the chip to perform the method of any one of claims 20 to 40.

85. A computer-readable storage medium, configured to store computer programs, which, when executed by a device, are operable with the device to perform the method of any one of claims 1 to 19.

86. A computer-readable storage medium, configured to store computer programs, which, when executed by a device, are operable with the device to perform the method of any one of claims 20 to 40.

87. A computer program product, comprising computer program instructions, wherein the computer program instructions are operable with a computer to perform the method of any one of claims 1 to 19.

88. A computer program product, comprising computer program instructions, wherein the computer program instructions are operable with a computer to perform the method of any one of claims 20 to 40.

89. A computer program, being operable with a computer to perform the method of any one of claims 1 to 19.

90. A computer program, being operable with a computer to perform the method of any one of claims 20 to 40.

91. A communication system, comprising:
a terminal device configured to perform the method of any one of claims 1 to 19; and
a first network device configured to perform the method of any one of claims 20 to 40.
